(19) **Europäisches Patentamt / European Patent Office / Office européen des brevets**

(11) **EP 4 386 298 B1**

(12) **FASCICULE DE BREVET EUROPEEN**

(45) Date de publication et mention
de la délivrance du brevet:
**04.02.2026 Bulletin 2026/06**

(51) Classification Internationale des Brevets (IPC):
**F27B 7/10** *(2006.01)* **F27B 7/20** *(2006.01)*
**F27B 7/34** *(2006.01)* **F27B 7/36** *(2006.01)*
**F27B 7/42** *(2006.01)* **F27D 17/00** *(2025.01)*
**F27D 19/00** *(2006.01)* **F27D 99/00** *(2010.01)*

(21) Numéro de dépôt: **23217078.7**

(22) Date de dépôt: **15.12.2023**

(52) Classification Coopérative des Brevets (CPC):
**F27B 7/10; F27B 7/2083; F27B 7/34; F27B 7/362;**
**F27B 7/42; F27D 17/20; F27D 17/30; F27D 17/302;**
**F27D 19/00; F27D 99/0033;** F27B 2007/365;
F27D 2019/0006; F27D 2019/0012;
F27D 2019/0015; F27D 2019/0028; (Cont.)

(54) **SYSTEME DE FUSION ET PROCEDE DE FUSION DE DECHETS D'ALUMINIUM**

SCHMELZSYSTEM UND VERFAHREN ZUM SCHMELZEN VON ALUMINIUMABFÄLLEN

MELTING SYSTEM, AND PROCESS FOR MELTING ALUMINUM SCRAP

(84) Etats contractants désignés:
**AL AT BE BG CH CY CZ DE DK EE ES FI FR GB**
**GR HR HU IE IS IT LI LT LU LV MC ME MK MT NL**
**NO PL PT RO RS SE SI SK SM TR**

(30) Priorité: **16.12.2022 FR 2213521**

(43) Date de publication de la demande:
**19.06.2024 Bulletin 2024/25**

(73) Titulaire: **Constellium Neuf-Brisach**
**68600 Biesheim (FR)**

(72) Inventeurs:
• **PICHAT, Anne**
**38500 SAINT-CASSIEN (FR)**
• **VASSEL, Alain**
**38960 SAINT ETIENNE DE CROSSEY (FR)**

(74) Mandataire: **Constellium - Propriété Industrielle**
**C-TEC Constellium Technology Center**
**Propriété Industrielle**
**Parc Economique Centr'Alp**
**725, rue Aristide Bergès**
**CS10027**
**38341 Voreppe (FR)**

(56) Documents cités:
EP-A1- 4 092 390        EP-A2- 1 243 663
WO-A1-01/33200        WO-A1-2005/085732
WO-A1-2021/220802        DE-A1- 102013 012 831
US-A1- 2005 103 159        US-A1- 2011 154 949
US-A1- 2020 284 513

(52) Classification Coopérative des Brevets (CPC):
(Cont.)Y02P 10/20

(52) Classification Coopérative des Brevets (CPC):
(Cont.)Y02P 10/20

**Description**

**Domaine technique de l'invention**

La présente invention concerne le domaine du recyclage des déchets d'aluminium et plus particulièrement, le domaine des systèmes de fusion de déchets d'aluminium pour fondre des déchets d'aluminium.

La présente invention concerne également le domaine des procédés de fusion de déchets d'aluminium par un système de fusion de déchets d'aluminium.

**Etat de la technique**

Dans le domaine du recyclage des déchets d'aluminium, il est connu d'utiliser des fours rotatifs, ou des fours rotatifs basculants. Cette technologie est spécifiquement conçue pour traiter les déchets oxydés, tels que les crasses de fonderie, ou les matériaux contenant des revêtements organiques tels que notamment des bobines revêtues, des chutes de fabrication, ou des matériaux constitués de petites particules individuelles, comme les boites de boisson, ou UBC pour « Used Beverage Can » selon la terminologie anglo-saxonne consacrée. Préalablement à leur introduction dans le four rotatif, les boites de boisson sont généralement compactées pour former une charge ayant globalement une forme parallélépipédique ou cubique. Etant donné que les boites de boissons sont revêtues de vernis et de peinture, on retrouve systématiquement dans ces charges, des résidus organiques. Le taux de carbone résiduel dans chaque charge est donc très variable et dépend de la quantité de vernis et de peinture présente sur les boites de boisson écrasées dans la charge et des conditions de pilotage du procédé.

Lors de la fusion des déchets d'aluminium, en dehors de l'aluminium liquide qui est destiné à être récupéré et coulé, il se forme également des oxydes qui sont des impuretés présentes dans la masse fondue. Pour éliminer ces oxydes, il est connu de l'état de la technique d'utiliser des sels qui permettent d'une part de limiter l'oxydation de l'aluminium, mais également de séparer ces oxydes de la masse fondue en formant un laitier à la surface du métal fondu.

Pour éliminer revêtements organiques, différentes méthodes peuvent être utilisées. Une première méthode telle que décrite dans le document US2017/0051914A1 consiste à évaporer par chauffage les revêtements organiques, puis réaliser une postcombustion dans une chambre séparée avant de réaliser la fusion du métal dans un second four.

Alternativement, et comme cela est décrit dans les documents WO2005/085732A1, et EP1243663A2, il est possible de réaliser l'élimination des revêtements organiques par un délaquage des boites de boisson par combustion directement dans le four servant à la fusion du métal. Lors d'une telle opération, la stœchiométrie utilisée par le comburant et le combustible est déterminante car elle influe sur la composition des fumées de combustion produites, et sur la qualité du métal liquide obtenu. Si la quantité de comburant n'est pas suffisante, la combustion est incomplète, et forme des composés organiques volatils (COV), plutôt que du dioxyde de carbone.

Le document EP4092390 décrit un appareil capable de surveiller et d'ajuster une condition de combustion dans un four en temps réel, comprenant : un four ayant une chambre de chauffage, une chambre de combustion, une porte de chargement, un orifice d'écoulement de gaz d'échappement, et un tuyau d'écoulement de gaz d'échappement et deux capteurs du même type disposés à des positions différentes dans le tuyau d'écoulement de gaz d'échappement et un dispositif de commande recevant des signaux des deux capteurs et ajustant, en fonction d'une différence entre les signaux, la quantité de carburant et/ou de gaz contenant de l'oxygène entrant dans la chambre de combustion.

Le document US2005/103159 décrit un procédé de fusion de l'aluminium, qui consiste à introduire de l'aluminium solide dans un four, à faire fondre l'aluminium pour former un bain d'aluminium, à détecter les variations de concentration en monoxyde de carbone (CO) et/ou en hydrogène (H2) et la température des fumées sortant du four, en déduisant la formation d'oxyde d'aluminium à la surface du bain d'aluminium en régulant le processus de fusion en fonction de la formation d'oxyde d'aluminium.

Le document WO 01/33200 concerne des procédés et des appareils utilisant des lasers à diode accordable pour surveiller et/ou contrôler un processus à haute température utilisant un comburant contenant de l'O2 et un combustible organique.

Le document US2020/284513 concerne un procédé de régulation d'une combustion dans un four chauffé par un brûleur doté d'au moins une lance à oxygène, dans lequel un combustible est amené via une alimentation en combustible du brûleur et l'oxygène est fourni au moins en partie avec une vitesse élevée de 100 m/s ou plus par la ou les lances à oxygène, et de l'oxygène dans une plage surstoechiométrique est fourni.

Le document DE102013012831 concerne un procédé de fusion d'aluminium contaminé dans un four à tambour rotatif. Le four à tambour rotatif est chauffé au moyen d'un brûleur, le brûleur étant allumé avec un mélange gazeux de combustible, d'oxygène et d'air, le brûleur étant allumé avec le mélange gazeux dans un rapport de mélange de combustible, d'oxygène et d'air de telle sorte que le brûleur soit allumé dans un rapport de combustion superstoechiométrique avec une valeur lambda supérieure à 1.

Le document US2011/154949 concerne un procédé pour faire fonctionner un four, dans lequel une matière première comprenant au moins un élément métallique est fondue, la matière première étant chauffée par au moins un brûleur qui fonctionne avec un débit volumique de combustible et un débit volumique d'un oxydant.

Le document WO2021/220802 concerne un four de fusion/raffinage pour sources de fer froid et un procédé de fonctionnement de four de fusion/raffinage, grâce auquel il devient possible d'améliorer l'efficacité de chauffage d'une matière première et de réduire la quantité d'énergie électrique requise pour faire fondre la matière première sans provoquer l'oxydation de la matière première, et réduire un temps de fusion/raffinage, et améliorer la productivité et réduire les coûts.

Les composés organiques volatils, désignent toutes les molécules organiques contenant au moins un atome de carbone associé à l'hydrogène, l'azote, l'oxygène, le soufre, le chlorure etc., à l'exception du monoxyde de carbone CO, du dioxyde de carbone $CO_2$, de l'eau $H_2O$, et des oxydes d'azote $NO_x$. Un premier problème que pose la formation de COV est que cela contribue à diminuer la température régnant à l'intérieur de l'enceinte du four. Un deuxième problème provient du fait que certains COV sont toxiques. Il est donc primordial de limiter leur formation, ou de diminuer drastiquement leur concentration avant l'évacuation des fumées de combustion hors du système de fusion. D'ailleurs, la plupart des procédés industriels sont soumis des exigences règlementaires qui régissent les seuils d'émission de COV.

Cependant si les conditions sont très oxydantes (c'est-à-dire avec une quantité de comburant supérieure à la quantité de combustible), on brûle toutes les matières organiques pour former du dioxyde de carbone, mais il est possible d'oxyder l'aluminium liquide, et donc de générer des oxydes. Une conséquence de cette génération d'oxydes est qu'ils peuvent être incorporés au métal fondu, ce qui dégrade la qualité du métal obtenu après solidification. Dans le document WO2005/085732A1 il est ainsi prévu une phase de réduction de l'oxydation de l'aluminium liquide pour éviter la formation d'oxydes. Cependant, une telle phase de réduction présente le désavantage d'augmenter la quantité de combustible relâchée (par exemple le méthane), qui est un composé organique volatil.

On comprend donc bien que, vu que le taux de carbone dans chaque charge est très variable, il est très difficile de contrôler la quantité maximale de charge à introduire dans le four pour garantir à la fois une combustion optimale et une fusion du métal présentant un bon rendement, tout en limitant les émissions de COV à l'extérieur du système de fusion. Par ailleurs, étant donné que le débit de comburant est limité techniquement par les capacités du four, il n'est parfois pas possible de fournir suffisamment de comburant pour empêcher une combustion incomplète, notamment si le taux de carbone dans la charge est trop important.

Par ailleurs, dans des dispositifs de fusion tels que décrit dans le document WO2005/085732A1, les fumées de combustion produites sont introduites dans une conduite pour être refroidies. Ce mode de refroidissement implique généralement la formation de dioxine toxiques qu'il conviendrait d'empêcher.

Objet de l'invention

La présente invention a pour but de proposer une solution qui réponde à tout ou partie des problèmes précités. En particulier, le système de fusion selon l'invention vise à :

- limiter la formation de COV;
- limiter la formation de dioxine ;
- réaliser la fusion de l'aluminium et la combustion des revêtements organiques à l'intérieur d'un même four, tout en limitant la formation d'oxydes ;
- réaliser la fusion d'une quantité optimale de déchets d'aluminium dans un four de grande dimension.

Ce but peut être atteint grâce à la mise en œuvre d'un système de fusion de déchets d'aluminium pour fondre des déchets d'aluminium, le système de fusion comprenant :

- un four de fusion destiné à fondre lesdits déchets d'aluminium, et comprenant :
- un tambour délimitant intérieurement une enceinte de fusion destinée à recevoir lesdits déchets d'aluminium à fondre ;
- un brûleur comprenant un dispositif d'allumage, au moins un injecteur de comburant, et au moins un injecteur de combustible, ledit injecteur de comburant étant configuré pour injecter un débit de comburant à l'intérieur de l'enceinte de fusion, ledit injecteur de combustible étant configuré pour injecter un débit de combustible à l'intérieur de l'enceinte de fusion, et le dispositif d'allumage étant configuré pour démarrer une combustion du comburant et du combustible injectés dans l'enceinte de fusion, pour apporter de la chaleur dans l'enceinte de fusion;
- des moyens d'évacuation configurés pour permettre d'extraire tout ou partie de fumées de combustion de l'intérieur de l'enceinte de fusion vers une zone d'air libre située à l'extérieur de l'enceinte de fusion et où l'air est libre de circulation ;
- une hotte d'aspiration disposée hors de l'enceinte de fusion et destinée à capter par aspiration tout ou partie desdites fumées de combustion présentes dans la zone d'air libre, ladite hotte d'aspiration comprenant en outre une conduite de contrôle comprenant un capteur de monoxyde de carbone configuré pour mesurer une valeur d'une concentration en monoxyde de carbone dans lesdites fumées de combustion captées par la hotte d'aspiration, le capteur de monoxyde de carbone comprenant un émetteur laser configuré pour émettre un rayonnement laser, et un récepteur laser configuré pour recevoir ledit rayonnement laser émis, et pour mesurer un spectre d'absorption dudit rayonnement laser reçu, la valeur de la concentration en monoxyde de carbone (C) étant déterminée à partir dudit spectre d'absorption ainsi mesuré ;

- un dispositif de commande configuré pour recevoir une information d'entrée représentative de la valeur de la concentration en monoxyde de carbone mesurée par le capteur de monoxyde de carbone, et pour piloter ledit débit de comburant injecté par ledit injecteur de comburant et/ou ledit débit de combustible injecté par ledit injecteur de combustible, en fonction de ladite information d'entrée, les débits de comburant et de combustible étant pilotés pour contenir le taux de COV en sortie du four de fusion à des concentrations inférieures à une valeur de sécurité.

Les dispositions précédemment décrites permettent de proposer un système de fusion de déchets d'aluminium apte à fondre les déchets d'aluminium pour obtenir de l'aluminium liquide, tout en permettant de brûler les composés organiques volatils à l'intérieur de l'enceinte de fusion. La présence du capteur de monoxyde de carbone communiquant avec le dispositif de commande permet en outre de piloter les débits de comburant et de combustible pour contenir le taux de COV en sortie du four de fusion à des concentrations inférieures à une valeur de sécurité.

De manière avantageuse, l'utilisation d'une hotte d'aspiration au niveau des moyens d'évacuation du four de fusion permet de refroidir rapidement les fumées de combustion en mélangeant les fumées avec l'air libre directement à la sortie du four, tout en captant lesdites fumées de combustion. De cette manière, il est possible de limiter la formation de dioxine dans les fumées de combustion, tout en garantissant le captage de toutes les fumées de combustion refroidies à la sortie du four de fusion.

Le système de fusion peut en outre présenter une ou plusieurs des caractéristiques suivantes, prises seules ou en combinaison.

Selon un mode de réalisation, le four de fusion comprend une porte d'introduction de matière configurée pour permettre l'introduction des déchets d'aluminium à l'intérieur de l'enceinte de fusion. Dans ce cas, la porte d'introduction de matière est ouverte pour introduire les déchets d'aluminium à l'intérieur de l'enceinte de fusion.

Par « piloter », on entend que le dispositif de commande est apte à réguler ou faire varier les débits de comburant et/ou de combustible introduits dans l'enceinte du four, par exemple par l'intermédiaire d'une ou plusieurs valves.

Selon un mode de réalisation, le dispositif de commande est un automate configuré pour piloter automatiquement le débit de comburant injecté par l'injecteur de comburant, et/ou le débit de combustible injecté par l'injecteur de combustible, et/ou optionnellement la vitesse de rotation du tambour rotatif, par exemple selon un algorithme enregistré dans une mémoire du dispositif de commande. Un tel algorithme pouvant comprendre des instructions correspondant à des modes de fonctionnement d'une étape de pilotage du procédé de fusion selon l'invention.

Selon un mode de réalisation, le four de fusion est un four rotatif comprenant un tambour rotatif configuré pour être mis en rotation.

De cette manière, il est possible d'accélérer ou ralentir la combustion des revêtements organiques par une mise en rotation du tambour rotatif.

Selon un autre mode de réalisation, le four de fusion est un four multichambre.

Selon un mode de réalisation, les moyens d'évacuation du four de fusion comprennent au moins une ouverture ménagée dans une paroi du four de fusion.

Selon un mode de réalisation, l'au moins une ouverture est disposée au niveau d'une porte du four de fusion, par exemple sur une portion supérieure de ladite porte.

Les dispositions précédemment décrites permettent de proposer une porte qui n'est pas étanche aux fumées de combustion. La conception et la fabrication d'une telle porte est donc facilitée par rapport à des systèmes de fusion de déchets d'aluminium dans lesquels la porte est étanche. Il est ainsi possible de concevoir et fabriquer des fours de fusion rotatifs de grandes dimensions aptes à recevoir une plus grande quantité de déchets d'aluminium.

De manière avantageuse, la présence de la hotte d'aspiration permet en outre d'empêcher la fuite de fumées de combustion en dehors du système de fusion de déchets d'aluminium, et donc de limiter les diffus dans l'atelier dans lequel se trouve le four de fusion.

Le capteur de monoxyde de carbone comprend un émetteur laser configuré pour émettre un rayonnement laser, et un récepteur laser configuré pour recevoir ledit rayonnement laser émis, et pour mesurer un spectre d'absorption dudit rayonnement laser reçu, la valeur de la concentration en monoxyde de carbone étant déterminée à partir dudit spectre d'absorption ainsi mesuré.

En d'autres termes, le capteur de monoxyde de carbone mesure la valeur de la concentration en monoxyde de carbone par une méthode de mesure par spectrométrie d'absorption laser, également appelée TDLAS pour « Tunable diode laser absorption spectroscopy » selon la terminologie anglo-saxonne consacrée.

De manière avantageuse, l'utilisation d'une méthode de mesure par spectrométrie d'absorption laser par le capteur de monoxyde de carbone permet de mesurer une valeur de la concentration en monoxyde de carbone avec une sensibilité de l'ordre de 0,3 ppm dans un intervalle de temps inférieur à 1 seconde. Cela est particulièrement avantageux pour effectuer un pilotage en temps quasi-réel du four de fusion pour contrôler la combustion des composés organiques volatils.

Par ailleurs, un tel capteur de monoxyde de carbone présente l'avantage d'être un moyen de mesure sans contact, facilitant la maintenance.

Enfin, cette méthode de mesure par spectrométrie en ligne permet de limiter l'interférence avec d'autres gaz, ce qui rend la mesure fiable.

Selon un mode de réalisation, le four de fusion comprend une lance additionnelle de comburant distincte de l'au moins un injecteur de comburant, et configurée pour permettre l'introduction d'un débit additionnel de comburant à l'intérieur de l'enceinte de fusion.

Selon un mode de réalisation, la lance additionnelle de comburant présente un débit maximal d'introduction de comburant dans l'enceinte de fusion qui est strictement supérieur à un débit maximal d'introduction de comburant de l'au moins un injecteur de comburant.

Les dispositions précédemment décrites permettent de proposer un four de fusion ayant des capacités d'injection de comburant améliorée, ce qui est particulièrement adapté pour améliorer la combustion des composés organiques volatils à l'intérieur de l'enceinte de fusion.

Selon un mode de réalisation, l'injecteur de comburant est un injecteur d'oxygène industriellement pur.

Selon un mode de réalisation la lance additionnelle de comburant est une lance d'oxygène industriellement pur.

De cette manière, il est possible d'améliorer la combustion des composés organiques volatils, sans refroidir l'intérieur du four de fusion. Cela est particulièrement avantageux pour réduire le temps et donc l'énergie nécessaire à apporter pour fondre une quantité donnée de déchets d'aluminium par rapport à un four de fusion utilisant un comburant comprenant une quantité de dioxygène strictement inférieure à 100%, typiquement de l'air ou de l'air enrichi avec de l'oxygène.

Selon un mode de réalisation, la conduite de contrôle de la hotte d'aspiration comprend une extrémité d'aspiration au niveau de laquelle sont captées les fumées de combustion, et une extrémité de filtration, opposée à l'extrémité d'aspiration, ladite extrémité de filtration étant munie d'un filtre à poussière configuré pour filtrer des produits de combustion distincts des COV restant dans les fumées de combustion, au niveau de l'extrémité de filtration. De manière avantageuse, le filtre à poussière peut être un filtre à chaux configuré à la fois pour capter les poussières restantes dans les fumées de combustion, et pour neutraliser les fumées acides comme l'aide chlorhydrique (HCl).

De cette manière, il est possible de filtrer les fumées de combustion avant qu'elles ne s'échappent à l'extérieur du système de fusion de déchets d'aluminium.

Selon un mode de réalisation, le système de fusion comprend un piège à dioxyde de carbone disposé au niveau de l'extrémité de filtration, ledit piège à dioxyde de carbone étant configuré pour piéger tout ou partie du dioxyde de carbone présent dans les fumées de combustion avant leur évacuation hors du système de fusion.

Le but de l'invention peut également être atteint grâce à la mise en œuvre d'un procédé de fusion de déchets d'aluminium par un système de fusion de déchets d'aluminium, le procédé de fusion comprenant :

- une étape de mise à disposition d'un système de fusion de déchets d'aluminium tel que décrit précédemment ;
- une première étape d'introduction dans laquelle une première quantité desdits déchets d'aluminium est introduite dans l'enceinte de fusion du four de fusion ;
- une étape de fusion dans laquelle le dispositif d'allumage est allumé pour que le brûleur apporte de la chaleur dans l'enceinte de fusion du four de fusion lorsqu'elle est alimentée en comburant et en combustible respectivement par l'injecteur de comburant, et par l'injecteur de combustible, ladite étape de fusion conduisant à la formation par fusion d'aluminium liquide, et à la formation de fumées de combustion ;
- une étape de mesure dans laquelle le capteur de monoxyde de carbone mesure la valeur de la concentration en monoxyde de carbone dans les fumées de combustion captées par la hotte d'aspiration ;
- une étape de pilotage dans laquelle le dispositif de commande reçoit une information d'entrée représentative de la valeur de la concentration en monoxyde de carbone mesurée par le capteur de monoxyde de carbone, et pilote le débit de comburant injecté par l'injecteur de comburant, et/ou pilote le débit de combustible injecté par l'injecteur de combustible, en fonction de ladite information d'entrée
- le procédé comprenant en outre une étape préalable de calibration (E11), dans laquelle une loi de corrélation est établie entre :
- une concentration moyenne en monoxyde de carbone (Cm) mesurée par le capteur de monoxyde de carbone (37), et
- une concentration moyenne en composés organiques volatils (COV) mesurée au niveau de l'extrémité de filtration (35) par un capteur de composés organiques volatils (COV),
- ladite loi de corrélation étant établie sur la base d'au moins trois valeurs de concentration moyenne en monoxyde de carbone (Cm) mesurées par le capteur de monoxyde de carbone (37), chacune associée à une valeur de concentration moyenne en composés organiques volatils ([COV]m) mesurée sur un même intervalle de temps.
- dans lequel les débits de comburant et de combustible sont pilotés pour contenir le taux de composés organiques volatils (COV) en sortie du four de fusion à des concentrations inférieures à une valeur de sécurité.

Dans un mode de réalisation avantageux, le débit de comburant injecté par l'injecteur de comburant, et/ou pilote le débit de combustible injecté par l'injecteur de combustible sont ajustés pour maintenir une stœchiométrie d'oxydation pour l'injection de gaz.

Les dispositions précédemment décrites permettent de proposer un procédé de fusion permettant à la fois de former de l'aluminium liquide à partir de déchets d'aluminium et de limiter la quantité de composés organiques volatils dans les fumées de combustion évacuées hors de l'enceinte de fusion du four de fusion par la thermolyse desdits composés organiques volatils in-situ dans le four de fusion.

Le procédé de fusion peut en outre présenter une ou plusieurs des caractéristiques suivantes, prises seules ou en combinaison.

Selon un mode de réalisation, la première étape d'introduction comprend en outre l'introduction d'au moins un sel, de manière à obtenir un laitier noté « L » recouvrant l'aluminium liquide et comprenant de l'alumine et ledit au moins un sel lors de l'étape de fusion.

De manière avantageuse, l'introduction d'au moins un sel lors de la première étape d'introduction permet de piéger des composés organiques résiduels solides qui proviennent de la thermolyse des matériaux organiques présents dans les déchets d'aluminium.

Selon un mode de réalisation, le procédé de fusion comprend une étape de vidange du four de fusion, dans laquelle tout ou partie de l'aluminium liquide contenu dans l'enceinte de fusion est extrait de l'enceinte de fusion, typiquement par basculement ou siphonage.

Selon un mode de réalisation, lors de l'étape de pilotage, le dispositif de commande pilote le débit de comburant injecté par l'injecteur de comburant, et/ou le débit de combustible injecté par l'injecteur de combustible selon les modes de fonctionnement suivants :

- un premier mode de fonctionnement dans lequel le débit de comburant et le débit de combustible sont choisis pour introduire le comburant et le combustible dans l'enceinte de fusion dans des proportions stœchiométriques, le premier mode de fonctionnement étant établi si la valeur de la concentration en monoxyde de carbone est strictement inférieure à un premier seuil ;
- un deuxième mode de fonctionnement dans lequel un rapport entre le débit de comburant et le débit de combustible est varié entre un rapport initial correspondant à une introduction dans des conditions stœchiométriques de comburant et de combustible dans l'enceinte de fusion respectivement par l'injecteur de comburant et l'injecteur de combustible, et un rapport maximal correspondant à un débit nul de combustible introduit par l'injecteur de combustible dans l'enceinte de fusion et un débit de comburant maximal introduit par l'injecteur de comburant dans l'enceinte de fusion, ledit rapport entre le débit de comburant et le débit de combustible étant varié en fonction de la valeur de la concentration en monoxyde de carbone mesurée, le deuxième mode de fonctionnement étant établi si la valeur de la concentration en monoxyde de carbone est strictement inférieure à un deuxième seuil et supérieure ou égale au premier seuil ;
- un troisième mode de fonctionnement dans lequel le débit de comburant est placé à la valeur de débit de comburant maximale, le débit de combustible est stoppé, et le dispositif d'allumage est éteint, le troisième mode de fonctionnement étant établi si la valeur de la concentration en monoxyde de carbone est strictement inférieure à un troisième seuil et supérieure ou égale au deuxième seuil ;
- un quatrième mode de fonctionnement dans lequel le débit de comburant est placé à une valeur de débit maximale, le débit de combustible est stoppé, le dispositif d'allumage est éteint, le quatrième mode de fonctionnement étant établi si la valeur de la concentration en monoxyde

de carbone est strictement supérieure au troisième seuil, lesdits seuils étant déterminés pour limiter les émissions de composés organiques volatils COV inférieurs à des seuils définis.

Selon un mode de réalisation, si le four de fusion est un four rotatif comprenant un tambour rotatif, le quatrième mode de fonctionnement comprend en outre la variation, et notamment la diminution de la vitesse de rotation du tambour rotatif.

Selon un mode de réalisation, le premier seuil est strictement inférieur au deuxième seuil.

Selon un mode de réalisation, le deuxième seuil est sensiblement égal à cinq fois la valeur du premier seuil.

Selon un mode de réalisation, le deuxième seuil est strictement inférieur au troisième seuil.

Selon un mode de réalisation, le troisième seuil est sensiblement égal à deux fois la valeur du deuxième seuil.

Selon un mode de réalisation, le premier seuil est sensiblement égal à 30 ppm.

Selon un mode de réalisation, le deuxième seuil est sensiblement égal à 150 ppm.

Selon un mode de réalisation le troisième seuil est sensiblement égal à 300 ppm.

Par « sensiblement égal », on entend « à plus ou moins 10% ».

De manière avantageuse, le pilotage des injecteurs de comburant et de combustible permet à la fois de limiter la formation de composés organiques volatils, mais également de se prémunir contre les risques de suroxydation. En effet, si les injecteurs de comburant et de combustibles sont placés dans les deuxième, troisième et quatrième mode de fonctionnement, l'excédent de comburant est consommé pour limiter la formation des composés organiques volatils, et ne vient pas oxyder l'aluminium liquide. D'ailleurs, et de manière avantageuse, si le procédé de fusion comprend l'introduction d'au moins un sel, le laitier formé fait écran contre l'oxydation de l'aluminium liquide par le comburant injecté.

Selon un mode de réalisation, le quatrième mode de fonctionnement comprend en outre l'introduction d'un débit additionnel de comburant à l'intérieur de l'enceinte de fusion par la lance additionnelle.

De cette manière, il est possible d'augmenter la quantité de comburant introduite dans l'enceinte de fusion, et de détruire par combustion une plus grande quantité de composés organiques volatils sans diminuer la température de fusion du four de fusion.

Selon un mode de réalisation, le premier mode de fonctionnement comprend la mise en œuvre d'une deuxième étape d'introduction dans laquelle une deuxième quantité de déchets d'aluminium est introduite dans l'enceinte de fusion du four de fusion. Par exemple, il peut être prévu que la deuxième étape d'introduction soit mise en œuvre lorsque le dispositif de commande pilote le débit de comburant et le débit de combustible dans le premier mode de fonctionnement directement après avoir piloté le débit de comburant et le débit de combustible dans un mode de fonctionnement choisi parmi le deuxième, le troisième, ou le quatrième mode de fonctionnement.

Ainsi, il est possible d'adapter la quantité de déchets d'aluminium introduite dans l'enceinte de fusion, sans mesurer au préalable la quantité de composés organiques volatils dans les déchets d'aluminium. Le rendement de fusion d'aluminium liquide est ainsi augmenté.

Selon un mode de réalisation, lors de l'étape de pilotage, si le dispositif d'allumage est éteint, et si la valeur de la concentration en monoxyde de carbone est strictement inférieure à une valeur seuil de redémarrage, alors le dispositif d'allumage est allumé, la valeur seuil de redémarrage étant strictement supérieure au premier seuil et strictement inférieure au deuxième seuil. Par exemple la valeur seuil de redémarrage est sensiblement égale à 1,5 fois la valeur du premier seuil.

Selon un mode de réalisation, la valeur seuil de redémarrage est sensiblement égale à 45 ppm.

De manière avantageuse, le rallumage du dispositif d'allumage une fois que la concentration en monoxyde de carbone est inférieur à un seuil suffisamment bas permet de relancer la fusion de l'aluminium, et de limiter la formation d'oxydes à la surface de l'aluminium liquide. Cette disposition permet de prendre en compte d'éventuels phénomènes d'hystérésis lors de la fusion du métal et de la combustion des revêtements organiques, qui sont liés à l'inertie du four de fusion.

Le procédé de fusion comprend une étape préalable de calibration, dans laquelle une loi de corrélation est établie entre :

- une concentration moyenne en monoxyde de carbone mesurée par le capteur de monoxyde de carbone, et
- une concentration moyenne en composés organiques volatils mesurée au niveau de l'extrémité de filtration par un capteur de composés organiques volatils,

ladite loi de corrélation étant établie sur la base d'au moins trois valeurs de concentration moyenne en monoxyde de carbone mesurées par le capteur de monoxyde de carbone, chacune associée à une valeur de concentration moyenne en composés organiques volatils mesurée sur un même intervalle de temps. Selon un mode de réalisation, la loi de corrélation est sous la forme d'une équation linéaire, et est établie par une méthode de régression linéaire. En effet, la demanderesse a constaté de manière surprenante qu'il était possible d'établir une relation linéaire entre la concentration moyenne en monoxyde de carbone en sortie du four de fusion, et la concentration moyenne en COV au niveau de l'extrémité de filtration. Cette loi de corrélation étant notamment dépendante du système de fusion utilisé, car elle dépend notamment du four de fusion, de la hotte d'aspiration et du taux de dilution des fumées de combustion à l'air libre avant leur captation par la hotte d'aspiration.

Selon un mode de réalisation, la concentration moyenne en composés organiques volatils mesurée au niveau de l'extrémité de filtration par un capteur de composés organiques volatils, est mesurée en aval du filtre à poussières, c'est-à-dire après que le filtre à poussières ait filtré les fumées de combustion.

Par exemple, l'intervalle de temps correspond à un cycle de fusion correspondant à l'intervalle de temps se passant entre l'introduction de la première quantité de déchets d'aluminium, et l'étape de vidange de l'aluminium liquide. Lors de ce cycle de fusion, une valeur de concentration moyenne en monoxyde de carbone est mesurée par le calcul d'une moyenne arithmétique des valeurs de concentrations en monoxyde de carbone mesurées par le capteur de monoxyde de carbone sur ledit cycle de fusion. Sur le même cycle de fusion, une valeur de concentration moyenne en COV est mesurée par le calcul d'une moyenne arithmétique des valeurs de concentrations en COV mesurées par le capteur de COV. Cette valeur moyenne de concentration en COV est alors associée à la valeur de concentration moyenne en monoxyde de carbone. Cette opération est répétée au moins trois fois pour obtenir au moins trois couples de valeurs de concentration moyenne en monoxyde de carbone et COV, permettant d'établir une équation linéaire sous la forme $[COV]_m = \alpha * Cm$ où $[COV]_m$ est la concentration moyenne en COV mesurée sur un cycle exprimée en milligramme d'équivalent carbone par normaux mètres cubes ($mg/Nm^3$), $Cm$ est la concentration moyenne en monoxyde de carbone mesurée sur un cycle exprimée en ppm, et $\alpha$ est un coefficient réel positif. Par exemple, le coefficient $\alpha$ est sensiblement égal à 0,4.

La valeur seuil de redémarrage, le premier seuil, le deuxième seuil, et le troisième seuil sont déterminés à l'issu de l'étape de calibration. Lesdits seuils sont déterminés pour limiter les émissions de composés organiques volatils inférieurs à des seuils définis, par exemple par l'utilisation, ou par des exigences normatives.

Par exemple, le premier seuil peut correspondre à la formule suivante :

$$S1 = \frac{2}{5\alpha}[COV]_{max}$$

le deuxième seuil peut correspondre à la formule suivante :

$$S2 = \frac{2}{\alpha}[COV]_{max}$$

le troisième seuil peut correspondre à la formule suivante :

$$S3 = \frac{4}{\alpha}[COV]_{max}$$

la valeur seuil de redémarrage peut correspondre à la formule suivante :

$$Sr = \frac{3}{5\alpha}[COV]_{max}$$

où $\alpha$ est le coefficient déterminé par l'établissement de l'équation linéaire décrite ci-dessus, et

où $[COV]max$ est une valeur maximale de concentration en moyenne en COV sur **un** cycle de fusion, fixée arbitrairement par l'utilisateur, ou par des exigences règlementaires ou normatives.

Selon **un** mode de réalisation, le procédé de fusion comprend en outre une étape de refroidissement, dans laquelle les fumées de combustion sont diluées et refroidies à l'air libre à l'extérieur de l'enceinte de fusion. Il est bien compris que sur **un** cycle de fusion, l'étape de refroidissement et l'étape de mesure peuvent être mises en œuvre simultanément et de manière continue.
Les dispositions précédemment décrites permettent de refroidir les fumées de combustion à l'extérieur de l'enceinte de fusion à l'air libre. Cette étape de refroidissement est particulièrement avantageuse car elle permet de diluer et refroidir les fumées de combustion en limitant au maximum la formation de dioxines toxiques.
Par exemple, l'étape de refroidissement comprend une étape d'évacuation dans laquelle les moyens d'évacuation sont actionnés pour permettre l'évacuation des fumées de combustion produites lors de l'étape de fusion à l'extérieur de l'enceinte de fusion et à l'air libre, et une étape d'aspiration dans laquelle la hotte d'aspiration capte par aspiration les fumées de combustion présentes à l'air libre à l'extérieur du four de fusion.
Selon un mode de réalisation, l'étape de pilotage est réalisée après l'étape de mesure au sein d'une même phase et ladite phase est répétée dans le temps, notamment de manière cyclique ou périodique.
Selon un mode de réalisation, l'étape de mesure est mise en œuvre plusieurs fois sur un intervalle temporel de pilotage, de manière à mettre en œuvre l'étape de pilotage plusieurs fois sur ledit intervalle temporel de pilotage.
Selon un mode de réalisation, l'étape de mesure et l'étape de pilotage sont mises en œuvre de manière continue et en temps réel sur l'intervalle de pilotage. Ainsi, il est possible de piloter en temps réel le four de fusion lors du procédé de pilotage. De cette manière, il est possible d'optimiser le temps de fusion de la quantité de déchets d'aluminium, tout en limitant la quantité de composés organiques volatils évacués hors de l'enceinte de fusion.

**Description sommaire des dessins**

D'autres aspects, buts, avantages et caractéristiques de l'invention apparaîtront mieux à la lecture de la description détaillée suivante de modes de réalisation préférés de celle-ci, donnée à titre d'exemple non limitatif, et faite en référence aux dessins annexés sur lesquels :

[Fig. 1] La figure 1 est une vue schématique d'un système de fusion selon un mode de réalisation particulier de l'invention.

[Fig. 2] La figure 2 est une vue schématique d'un procédé de fusion selon un mode de réalisation particulier de l'invention.

**Description détaillée**

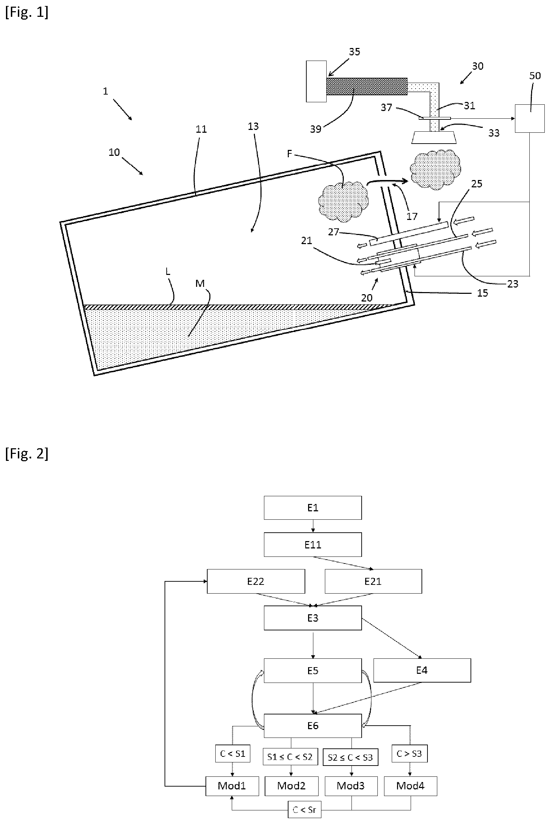

Sur les figures et dans la suite de la description, les mêmes références représentent les éléments identiques ou similaires. De plus, les différents éléments ne sont pas représentés à l'échelle de manière à privilégier la clarté des figures. Par ailleurs, les différents modes de réalisation et variantes ne sont pas exclusifs les uns des autres et peuvent être combinés entre eux.
Comme cela est illustré sur la figure 1, l'invention concerne un système de fusion 1 de déchets d'aluminium pour fondre des déchets d'aluminium. De tels déchets d'aluminium peuvent par exemple correspondre à des boites de boisson ayant été compactées ensemble de sorte à former une masse de déchets à fondre.
Le système de fusion 1 comprend tout d'abord un four de fusion 10 destiné à fondre lesdits déchets d'aluminium. Selon une première variante, le four de fusion 10 est un four rotatif, mais une telle variante n'est pas limitative et il est également possible que le four de fusion 10 soit un four multichambre, ou tout autre four apte à fondre de l'aluminium, c'est-à-dire pouvant placer une masse de déchets à une température supérieure à 660°C.

Le four de fusion 10 comprend un tambour 11 qui délimite intérieurement une enceinte de fusion 13 destinée à recevoir les déchets d'aluminium à fondre. Selon la variante précédemment décrite dans laquelle le four de fusion 10 est un four rotatif, le tambour 11, est un tambour 11 rotatif configuré pour être mis en rotation. De cette manière, il est possible d'accélérer ou ralentir la combustion des revêtements organiques par une mise en rotation du tambour 11 rotatif.

Le four de fusion 10 comprend également un brûleur 20 comprenant un dispositif d'allumage 21, au moins un injecteur de comburant 23, et au moins un injecteur de combustible 25.

L'injecteur de comburant 23 est configuré pour injecter un débit de comburant à l'intérieur de l'enceinte de fusion 13. Il est généralement couplé à une alimentation en comburant disposée à l'extérieur du four de fusion 10, ainsi qu'à une valve de comburant permettant de faire varier le débit de comburant injecté à l'intérieur de l'enceinte de fusion 13. Une telle valve de comburant peut avantageusement être actionnée automatiquement, de manière à pouvoir piloter ou faire varier automatiquement le débit de comburant inséré à l'intérieur de l'enceinte de combustion 13. Selon un mode de réalisation, le brûleur 20 comprend un injecteur de comburant 23 central disposé à proximité du dispositif d'allumage 21, ainsi que 4 injecteurs de comburant 23 périphériques disposés à égale distance de l'injecteur de comburant 23 central. Cependant, une telle architecture n'est pas limitative, et le brûleur 20 peut comprendre un ou plusieurs injecteurs de comburant 23 agencés d'une autre manière.

De manière avantageuse, l'injecteur de comburant 23 peut être un injecteur d'oxygène industriellement pur. De cette manière, il est possible d'améliorer la combustion des composés organiques volatils COV, sans refroidir l'intérieur du four de fusion 10. Cela est particulièrement avantageux pour réduire le temps et donc l'énergie nécessaire à apporter pour fondre une quantité donnée de déchets d'aluminium par rapport à un four de fusion 10 utilisant un comburant comprenant une quantité de dioxygène strictement inférieure à 100%, typiquement de l'air ou de l'air enrichi avec de l'oxygène.

L'injecteur de combustible 25 est de son côté configuré pour injecter un débit de combustible à l'intérieur de l'enceinte de fusion 13. Il est généralement couplé à une alimentation en combustible disposée à l'extérieur du four de fusion 10, ainsi qu'à une valve de combustible permettant de faire varier le débit de combustible injecté à l'intérieur de l'enceinte de fusion 13. Une telle valve de combustible peut également être actionnée automatiquement, de manière à pouvoir piloter ou faire varier automatiquement le débit de combustible inséré à l'intérieur de l'enceinte de combustion 13. Selon un mode de réalisation, le brûleur 20 peut comprendre un unique injecteur de combustible 25 disposé à proximité de l'injecteur de comburant 23 central et du dispositif d'allumage 21.

Le dispositif d'allumage 21 est configuré pour démarrer une combustion du comburant et du combustible injectés dans l'enceinte de fusion 13, afin d'apporter de la chaleur dans l'enceinte de fusion 13. Ainsi, le brûleur 20 est apte à permettre la fusion des déchets d'aluminium dans l'enceinte de fusion 13. Par ailleurs, le four de fusion 10 permet la combustion des composés organiques présents dans les déchets d'aluminium.

Comme cela est illustré sur la figure 1, le four de fusion 10 peut également comprendre une lance additionnelle 27 de comburant distincte de l'au moins un injecteur de comburant 23, et configurée pour permettre l'introduction d'un débit additionnel de comburant à l'intérieur de l'enceinte de fusion 13. Cette lance additionnelle 27 de comburant n'est généralement pas comprise dans le brûleur 20. Elle peut par exemple présenter un débit maximal d'introduction de comburant dans l'enceinte de fusion 13 qui est strictement supérieur à un débit maximal d'introduction de comburant de l'au moins un injecteur de comburant 23. De la même manière que pour l'injecteur de comburant 23, la lance additionnelle 27 de comburant peut être une lance d'oxygène industriellement pur. Les dispositions précédemment décrites permettent de proposer un four de fusion 10 ayant des capacités d'injection de comburant améliorée, ce qui est particulièrement adapté pour améliorer la combustion des composés organiques volatils COV à l'intérieur de l'enceinte de fusion 13.

Le four de fusion 10 comprend enfin des moyens d'évacuation 17 configurés pour permettre d'extraire tout ou partie de fumées de combustion notées « F » de l'intérieur de l'enceinte de fusion 13 vers une zone d'air libre située à l'extérieur de l'enceinte de fusion 13 et où l'air est libre de circulation. Comme cela est illustré sur la figure 1, le four de fusion 10 peut comprendre une porte 15 d'introduction de matière configurée pour permettre l'introduction des déchets d'aluminium à l'intérieur de l'enceinte de fusion 13, lorsque cette porte 15 est ouverte. Par exemple, les moyens d'évacuation 17 du four de fusion 10 peuvent consister en au moins une ouverture ménagée dans une paroi du four de fusion 10, par exemple au niveau de la porte 15 du four de fusion 10 qui sert à l'introduction de matière. Sur la figure 1, les moyens d'évacuation 17 comprennent une unique ouverture disposée sur une portion supérieure de la porte 15, il est néanmoins bien compris que les moyens d'évacuation 17 peuvent aussi comprendre plusieurs ouvertures. Les dispositions précédemment décrites permettent de proposer une porte 15 qui n'est pas étanche aux fumées de combustion F. La conception et la fabrication d'une telle porte 15 est donc facilitée par rapport à des systèmes de fusion de déchets d'aluminium dans lesquels la porte 15 est étanche. Il est ainsi possible de concevoir et fabriquer des fours de fusion 10 rotatifs de grandes dimensions aptes à recevoir une plus grande quantité de déchets d'aluminium.

Le système de fusion 1 de déchets d'aluminium comprend en outre une hotte d'aspiration 30 disposée hors de l'enceinte de fusion 13 et destinée à capter par aspiration tout ou partie desdites fumées de combustion F présentes dans la zone d'air libre. La hotte d'aspiration 30 comprend une conduite de contrôle 31 qui peut comprendre une extrémité d'aspiration 33 au niveau de laquelle sont captées les fumées de combustion F. Par exemple cette extrémité d'aspiration 33 peut être disposée au niveau des moyens d'évacuation 17 du four de fusion 10. De cette manière, il est possible de refroidir rapidement les fumées de combustion F en les mélangeant avec l'air libre directement à la sortie du four, tout en captant lesdites fumées de combustion F. La formation de dioxine par synthèse de novo dans les fumées de combustion F est donc limitée, et les fumées de combustion F sont refroidies et captées directement à la sortie du four de fusion 10. En d'autres termes, la présence de la hotte d'aspiration 30 permet d'empêcher la fuite de fumées de combustion F en dehors du système de fusion 1 de déchets d'aluminium et donc de limiter les diffus dans l'atelier dans lequel se trouve le four de fusion 10.

La conduite de contrôle 31 de la hotte d'aspiration 30 peut également comprendre une extrémité de filtration 35 opposée à l'extrémité d'aspiration 33. Cette extrémité de filtration 35 peut avantageusement être munie d'un filtre à poussière 39 configuré pour filtrer des produits de combustion distincts des COV restant dans les fumées de combustion F, au niveau de l'extrémité de filtration 35. De manière avantageuse, le filtre à poussière 39 peut être un filtre à chaux configuré à la fois pour capter les poussières restantes dans les fumées de combustion, et pour neutraliser les fumées acides comme l'aide chlorhydrique (HCl). De cette manière, il est possible de filtrer les fumées de combustion F avant qu'elles ne s'échappent à l'extérieur du système de fusion 1 de déchets d'aluminium. Selon une variante non représentée, le système de fusion 1 comprend un piège à dioxyde de carbone disposé au niveau de l'extrémité de filtration 35, ledit piège à dioxyde de carbone étant configuré pour piéger tout ou partie du dioxyde de carbone présent dans les fumées de combustion F avant leur évacuation hors du système de fusion 1.

La conduite de contrôle 31 comprend un capteur de monoxyde de carbone 37 configuré pour mesurer une valeur d'une concentration en monoxyde de carbone notée « C » dans lesdites fumées de combustion F captées par la hotte d'aspiration 30. Le capteur de monoxyde de carbone 37 comprend un émetteur laser configuré pour émettre un rayonnement laser, et un récepteur laser configuré pour recevoir ledit rayonnement laser émis, et pour mesurer un spectre d'absorption dudit rayonnement laser reçu, la valeur de la concentration en monoxyde de carbone C étant déterminée à partir dudit spectre d'absorption ainsi mesuré. En d'autres termes, le capteur de monoxyde de carbone 37 mesure la valeur de la concentration en monoxyde de carbone C par une méthode de mesure par spectrométrie d'absorption laser, également appelée TDLAS pour « Tunable diode laser absorption spectroscopy » selon la terminologie anglo-saxonne consacrée. De manière avantageuse, l'utilisation d'une méthode de mesure par spectrométrie d'absorption laser par le capteur de monoxyde de carbone 37 permet de mesurer une valeur de la concentration en monoxyde de carbone C avec une sensibilité de l'ordre de 0,3 ppm dans un intervalle de temps inférieur à 1 seconde. Cela est particulièrement avantageux pour effectuer un pilotage en temps quasi-réel du four de fusion 10 pour contrôler la combustion des composés organiques volatils. Par ailleurs, un tel capteur de monoxyde de carbone 37 présente l'avantage d'être un moyen de mesure sans contact, facilitant la maintenance. Enfin, cette méthode de mesure par spectrométrie en ligne permet de limiter l'interférence avec d'autres gaz, ce qui rend la mesure fiable.

Enfin, le système de fusion 1 de déchets d'aluminium comprend un dispositif de commande 50 configuré pour recevoir une information d'entrée représentative de la valeur de la concentration en monoxyde de carbone C mesurée par le capteur de monoxyde de carbone 37, et pour piloter le débit de comburant injecté par ledit injecteur de comburant 23 et/ou le débit de combustible injecté par ledit injecteur de combustible 25, en fonction de ladite information d'entrée, les débits de comburant et de combustible étant pilotés pour contenir le taux de COV en sortie du four de fusion à des concentrations inférieures à une valeur de sécurité. Par « piloter », on entend que le dispositif de commande 50 est apte à réguler ou faire varier les débits de comburant et/ou de combustible introduits dans l'enceinte du four, par exemple par l'intermédiaire d'une ou plusieurs valves. De manière générale, le dispositif de commande 50 est un automate configuré pour piloter automatiquement le débit de comburant injecté par l'injecteur de comburant 23 et/ou le débit de combustible injecté par l'injecteur de combustible 25, et/ou optionnellement la vitesse de rotation du tambour 11 rotatif, par exemple selon un algorithme enregistré dans une mémoire du dispositif de commande 50. Un tel algorithme pouvant comprendre des instructions correspondant à des modes de fonctionnement d'une étape de pilotage E6 du procédé de fusion qui sera décrite plus loin.

Les dispositions précédemment décrites permettent de proposer un système de fusion 1 de déchets d'aluminium apte à fondre les déchets d'aluminium pour obtenir de l'aluminium liquide noté « M », tout en permettant de brûler les composés organiques volatils COV à l'intérieur de l'enceinte de fusion 13. La présence du capteur de monoxyde de carbone 37 communiquant avec le dispositif de commande 50 permet de piloter les débits de comburant et de combustible pour contenir le taux de COV en sortie du four de fusion 10 à des concentrations inférieures à une valeur de sécurité.

L'invention concerne également un procédé de fusion de déchets d'aluminium par un système de fusion 1 de déchets d'aluminium. A l'issu du procédé de fusion, il est généralement prévu la mise en œuvre d'une étape de vidange du four de fusion 10 (non représentée), dans laquelle tout ou partie de l'aluminium liquide M contenu dans l'enceinte de fusion est extrait de l'enceinte de fusion 13, typiquement par basculement ou siphonage.

Un mode de réalisation du procédé de fusion est par exemple présenté à la figure 2. Le procédé de fusion comprend tout d'abord une étape de mise à disposition E1 d'un système de fusion 1 de déchets d'aluminium du type d'un de ceux décrits précédemment.

Préalablement à la mise en œuvre d'autres étapes du procédé de fusion, il est réalisé une étape de calibration E11, dans laquelle des paramètres de pilotage du four de fusion 10 sont déterminés. Comme nous le verrons par la suite, ces paramètres de pilotage peuvent être utilisés lors d'une étape de pilotage E6 qui est alors mise en œuvre différemment en fonction desdits paramètres de pilotage du four, c'est-à-dire en fonction du type de four de fusion 10 utilisé, ou en fonction de la taille de ce four de fusion 10. Lors de l'étape de calibration E11, une loi de corrélation, par exemple sous la forme d'une équation linéaire est établie entre :

- une concentration moyenne en monoxyde de carbone Cm mesurée par le capteur de monoxyde de carbone 37, et
- une concentration moyenne en composés organiques volatils $[COV]_m$ mesurée au niveau de l'extrémité de filtration 35 par un capteur de composés organiques volatils COV.

Par exemple, une telle loi de corrélation est établie par une méthode de régression linéaire sur la base d'au moins trois valeurs de concentration moyenne en monoxyde de carbone Cm déterminées à partir de mesures du capteur de monoxyde de carbone 37, chacune associée à une valeur de concentration moyenne en composés organiques volatils $[COV]_m$ déterminée sur un même intervalle de temps. En effet, la demanderesse a constaté de manière surprenante qu'il était possible d'établir une relation linéaire entre la concentration moyenne en monoxyde de carbone Cm en sortie du four de fusion 10, et la concentration moyenne en COV $[COV]_m$ au niveau de l'extrémité de filtration 35. Cette loi de corrélation est dépendante du système de fusion 1 utilisé, car elle dépend notamment du four de fusion 10, de la hotte d'aspiration 30 et du taux de dilution des fumées de combustion F à l'air libre avant leur captation par la hotte d'aspiration 30.

Selon un mode de réalisation, la concentration moyenne en composés organiques volatils mesurée au niveau de l'extrémité de filtration 35 par un capteur de composés organiques volatils, est mesurée en aval du filtre à poussières 39, c'est-à-dire après que le filtre à poussières 39 ait filtré les fumées de combustion F.

Par exemple, l'intervalle de temps correspond à un cycle de fusion, qui correspond à l'intervalle de temps se passant entre l'introduction de la première quantité de déchets d'aluminium, et l'étape de vidange de l'aluminium liquide M. Lors de ce cycle de fusion, une valeur de concentration moyenne en monoxyde de carbone Cm est mesurée par le calcul d'une moyenne arithmétique des valeurs de concentrations en monoxyde de carbone C mesurées par le capteur de monoxyde de carbone 37 sur ledit cycle de fusion. Sur le même cycle de fusion, une valeur de concentration moyenne en COV $[COV]_m$ est mesurée par le calcul d'une moyenne arithmétique des valeurs de concentrations en COV $[COV]$ mesurées par le capteur de COV.

Cette valeur moyenne de concentration en COV $[COV]_m$ est alors associée à la valeur de concentration moyenne en monoxyde de carbone Cm. Cette opération est répétée au moins trois fois pour obtenir au moins trois couples de valeurs de concentration moyenne en monoxyde de carbone Cm et COV $[COV]_m$, permettant d'établir une équation linéaire sous la forme $[COV]_m = \alpha * Cm$, où $[COV]_m$ est la concentration moyenne en COV mesurée sur un cycle exprimée en milligrammes d'équivalent carbone par normaux mètres cube $(mg/Nm^3)$, Cm est la concentration moyenne en monoxyde de carbone mesuré sur un cycle exprimée en ppm, et $\alpha$ est un coefficient réel positif. Par exemple le coefficient $\alpha$ déterminé dans ce cas est égal à 0,4.

Il est ensuite possible de déterminer une valeur seuil de redémarrage Sr, un premier seuil S1, un deuxième seuil S2, et un troisième seuil S3 à l'issu de l'étape de calibration E11, qui constituent les paramètres de pilotage qui peuvent être utilisés dans l'étape de pilotage E6. Lesdits seuils sont déterminés pour limiter les émissions de composés organiques volatils COV inférieurs à des seuils définis, par exemple par l'utilisation, ou par des exigences normatives.

Par exemple, le premier seuil S1 peut correspondre à la formule suivante :

$$S1 = \frac{2}{5\alpha}[COV]_{max}$$

le deuxième seuil S2 peut correspondre à la formule suivante :

$$S2 = \frac{2}{\alpha}[COV]_{max}$$

le troisième seuil S3 peut correspondre à la formule suivante :

$$S3 = \frac{4}{\alpha}[COV]_{max}$$

la valeur seuil de redémarrage Sr peut correspondre à la formule suivante :

$$Sr = \frac{3}{5\alpha}[COV]_{max}$$

où α est le coefficient déterminé par l'établissement de l'équation linéaire décrite ci-dessus, et

où [COV]max est une valeur maximale de concentration en moyenne en COV sur un cycle, fixée arbitrairement par l'utilisateur, ou par des exigences règlementaires ou normatives.

Bien que de telles valeurs ne soient pas limitatives, la fixation de tels seuils par la loi de corrélation, en fonction de la valeur maximale de concentration en moyenne en COV sur un cycle, fixée arbitrairement par l'utilisateur, ou par des exigences règlementaires ou normatives permet de garantir que les émissions de COV resteront en moyenne sur un cycle de fusion contenues à des concentrations inférieures à une valeur de sécurité et seront inférieure aux seuils réglementaires.

Le procédé de fusion comprend ensuite une première étape d'introduction E21 dans laquelle une première quantité desdits déchets d'aluminium est introduite dans l'enceinte de fusion 13 du four de fusion 10. La première étape d'introduction E21 peut également comprendre l'introduction d'au moins un sel avec les déchets d'aluminium. Ainsi, lors de l'étape de fusion qui sera décrite plus loin, il est possible d'obtenir un laitier L recouvrant l'aluminium liquide M et comprenant de l'alumine et ledit au moins un sel. De manière avantageuse, l'introduction d'au moins un sel lors de la première étape d'introduction E21 permet de piéger des composés organiques résiduels solides (hydrocarbures polycycliques aromatiques, suies, ...) qui proviennent de la thermolyse des matériaux organiques présents dans les déchets d'aluminium. Ce laitier L présente également l'avantage de former une couche de protection contre l'oxydation qui est particulièrement utile lors de toutes les étapes du procédé de fusion, et notamment lors de l'étape de pilotage E6.

Une fois que les premières matières nécessaires à la fusion ont été introduites dans le four, le procédé de fusion comprend une étape de fusion E3 dans laquelle le dispositif d'allumage 21 est allumé pour que le brûleur 20 apporte de la chaleur dans l'enceinte de fusion 13 du four de fusion 10 lorsqu'elle est alimentée en comburant et en combustible respectivement par l'injecteur de comburant 23, et par l'injecteur de combustible 25. Cette étape de fusion E3 conduit ainsi à la formation par fusion d'aluminium liquide M, et à la formation de fumées de combustion F, mais également du laitier L si un sel a été introduit dans l'enceinte de fusion 13.

Le procédé de fusion comprend généralement une étape de refroidissement E4, dans laquelle les fumées de combustion F sont diluées et refroidies à l'air libre à l'extérieur de l'enceinte de fusion 13. Comme cela est visible sur la figure 1, l'étape de refroidissement E4 peut comprendre une étape d'évacuation dans laquelle les moyens d'évacuation 17 sont actionnés pour permettre l'évacuation des fumées de combustion F produites lors de l'étape de fusion E3 à l'extérieur de l'enceinte de fusion 13 et à l'air libre. Ensuite, une étape d'aspiration peut être mise en œuvre, dans laquelle la hotte d'aspiration 30 capte par aspiration les fumées de combustion F présentes à l'air libre à l'extérieur du four de fusion 10. Les dispositions précédemment décrites permettent de refroidir les fumées de combustion F à l'extérieur de l'enceinte de fusion 13 à l'air libre. Cette étape de refroidissement E4 est particulièrement avantageuse car elle permet de diluer et refroidir les fumées de combustion F en limitant au maximum la formation de dioxines toxiques.

Dès lors que les fumées de combustion F sont captées par la hotte d'aspiration 30, le procédé de fusion comprend l'étape de mesure E5 dans laquelle le capteur de monoxyde de carbone 37 mesure la valeur de la concentration en monoxyde de carbone C dans les fumées de combustion F. Cette étape de mesure E5 permet de déterminer en temps réel la concentration en monoxyde de carbone C dans les fumées de combustion F, et ce, de manière très rapide après que ces fumées de combustion F aient été formées. Cela est particulièrement avantageux, car cela permet de connaitre de manière très rapide la concentration en COV dans les fumées de combustion F, lorsqu'on se réfère à la formule établie lors de l'étape de calibration E11 par exemple. Il est bien compris que sur un cycle de fusion, l'étape de refroidissement E4, et l'étape de mesure E5 peuvent être mises en œuvre simultanément et de manière continue.

Le procédé de fusion comprend également l'étape de pilotage E6 dans laquelle le dispositif de commande 50 reçoit une information d'entrée représentative de la valeur de la concentration en monoxyde de carbone C mesurée par le capteur de monoxyde de carbone 37, et pilote le débit de comburant injecté par l'injecteur de comburant 23, et/ou pilote le débit de combustible injecté par l'injecteur de combustible 25, en fonction de ladite information d'entrée, les débits de comburant et de combustible étant pilotés pour contenir le taux de COV en sortie du four de fusion à des concentrations inférieures à une valeur de sécurité. Par « piloter », on entend que le dispositif de commande 50 est apte à réguler ou faire varier les débits de comburant et/ou de combustible introduits dans l'enceinte du four, par exemple par l'intermédiaire d'une ou plusieurs valves.

En particulier, et comme cela est détaillé sur le mode de réalisation non limitatif de la figure 2, lors de l'étape de pilotage E6, le dispositif de commande 50 pilote le débit de comburant injecté par l'injecteur de comburant 23, et/ou le débit de combustible injecté par l'injecteur de combustible 25 selon les modes de fonctionnement suivants.

Un premier mode de fonctionnement Mod1 comprend le fait de choisir le débit de comburant et le débit de combustible pour introduire le comburant et le combustible dans l'enceinte de fusion 13 dans des proportions stœchiométriques. Ce premier mode de fonctionnement Mod1 est établi si la valeur de la concentration en monoxyde de carbone C est strictement inférieure au premier seuil S1, par exemple tel qu'il a été déterminé lors de l'étape de calibration E11. Selon un mode de réalisation, le premier seuil S1 est sensiblement égal à 25 ppm, 30 ppm, 35 ppm ou 40 ppm. De manière optionnelle, le premier mode de fonctionnement Mod1 peut également comprendre la mise en œuvre d'une deuxième étape d'introduction E22 dans laquelle une deuxième quantité de déchets d'aluminium est introduite dans l'enceinte de fusion 13 du four de fusion 10. Par exemple, il peut être prévu que la deuxième étape d'introduction E22 soit mise en œuvre lorsque le dispositif de commande 50 pilote le débit de comburant et le débit de combustible dans le premier mode de fonctionnement directement après avoir piloté le débit de comburant et le débit de combustible dans un mode de fonctionnement choisi parmi un deuxième, un troisième, ou un quatrième mode de fonctionnement qui sont décrits ci-après. Ainsi, il est possible d'adapter la quantité de déchets d'aluminium introduite dans l'enceinte de fusion 13, sans mesurer au préalable la quantité de composés organiques volatils COV dans les déchets d'aluminium. Le rendement de fusion d'aluminium liquide M est ainsi augmenté.

Un deuxième mode de fonctionnement comprend le fait de faire varier un rapport entre le débit de comburant et le débit de combustible. Ce rapport est varié entre un rapport initial correspondant à une introduction du comburant et du combustible dans des conditions stœchiométriques dans l'enceinte de fusion 13, et un rapport maximal correspondant à une valeur de débit nulle de combustible introduite dans l'enceinte de fusion 13 et une valeur de débit de comburant maximale introduite dans l'enceinte de fusion 13 par l'injecteur de comburant 23, ledit rapport entre le débit de comburant et le débit de combustible étant varié en fonction de la valeur de la concentration en monoxyde de carbone C mesurée par le capteur de monoxyde de carbone 37. Il est donc bien compris que dans le deuxième mode de fonctionnement Mod2, le comburant est toujours introduit soit dans des conditions stœchiométriques par rapport au combustible, soit en excès. Pour cela, il est possible soit d'augmenter le débit de comburant introduit dans l'enceinte de fusion 13 par l'injecteur de comburant 23, soit de diminuer le débit de combustible introduit dans l'enceinte de fusion 13 par l'injecteur de combustible 25, soit les deux. La variation du rapport entre le débit de combustible et le débit de comburant introduits dans l'enceinte de fusion 13 peut être proportionnelle à la concentration en monoxyde de carbone C, ou liée à la concentration en monoxyde de carbone par une relation exponentielle ou toute autre relation déterminée par l'homme du métier, par exemple de manière expérimentale. Ce deuxième mode de fonctionnement Mod2 est établi si la valeur de la concentration en monoxyde de carbone C est strictement inférieure à un deuxième seuil S2 et supérieure ou égale au premier seuil S1. Ainsi, le premier seuil S1 est strictement inférieur au deuxième seuil S2. Selon un mode de réalisation, le deuxième seuil S2 est sensiblement égal à 125 ppm, 150 ppm, 175 ppm, ou 200ppm. De manière plus générale, le deuxième seuil S2 peut être sensiblement égal à cinq fois la valeur du premier seuil S1. Par « sensiblement égal », on entend à plus ou moins 10%.

Un troisième mode de fonctionnement Mod3 comprend le fait de placer le débit de comburant à la valeur de débit de comburant maximale, de stopper le débit de combustible, et d'éteindre le dispositif d'allumage 21. Ce troisième mode de fonctionnement Mod3 est établi si la valeur de la concentration en monoxyde de carbone C est strictement inférieure à un troisième seuil S3 et supérieure ou égale au deuxième seuil S2. Ainsi, le deuxième seuil S2 est strictement inférieur au troisième seuil S3. Selon un mode de réalisation le troisième seuil S3 est sensiblement égal à 250ppm, 300 ppm, 350 ppm, ou 400 ppm. De manière plus générale, le troisième seuil S3 peut être sensiblement égal à deux fois la valeur du deuxième seuil S2.

Etant donné que le troisième mode de fonctionnement Mod3 comprend l'extinction du dispositif d'allumage, il est parfois nécessaire de relacer l'étape de fusion E3 une fois que la concentration en monoxyde de carbone C mesurée est passée en dessous d'un certain seuil, et gagner ainsi du temps sur la fusion des déchets d'aluminium. Ainsi, si le dispositif d'allumage 21 est éteint, et si la valeur de la concentration en monoxyde de carbone C est strictement inférieure à une valeur seuil de redémarrage Sr, alors le dispositif d'allumage 21 est allumé. La valeur seuil de redémarrage Sr est généralement strictement supérieure au premier seuil S1 et strictement inférieure au deuxième seuil S2. Selon un mode de réalisation, la valeur seuil de redémarrage Sr est sensiblement égal à 37,5 ppm, 45 ppm, 52,5 ppm, ou 60 ppm. De manière plus générale la valeur seuil de redémarrage Sr est sensiblement égale à 1,5 fois la valeur du premier seuil S1. De manière avantageuse, le rallumage du dispositif d'allumage 21 une fois que la concentration en monoxyde de carbone C est inférieure à un seuil suffisamment bas permet de relancer la fusion des déchets d'aluminium, et de limiter la formation d'oxydes à la surface de l'aluminium liquide M. Cette disposition permet de prendre en compte d'éventuels phénomènes d'hystérésis lors de la fusion du métal et de la combustion des revêtements organiques, qui sont liés à l'inertie du four de fusion 10.

Enfin, un quatrième mode de fonctionnement Mod4 comprend le fait de placer le débit de comburant à une valeur de débit maximale, de stopper le débit de combustible, et d'éteindre le dispositif d'allumage 21 s'il n'a pas déjà été éteint auparavant. Ce quatrième mode de fonctionnement Mod4 est établi si la valeur de la concentration en monoxyde de carbone C est strictement supérieure au troisième seuil S3. De manière avantageuse, si le four de fusion 10 est un four rotatif comprenant un tambour 11 rotatif, le quatrième mode de fonctionnement Mod4 comprend également la variation et notamment la diminution de la vitesse de rotation du tambour 11 rotatif. Par ailleurs, si le four de fusion 10 comprend une lance additionnelle 27 de comburant, alors le quatrième mode de fonctionnement Mod4 comprend également l'introduction d'un débit additionnel de comburant à l'intérieur de l'enceinte de fusion 13 par la lance additionnelle 27. De cette manière, il est possible d'augmenter la quantité de comburant introduite dans l'enceinte de fusion 13, et de détruire par combustion une plus grande quantité de composés organiques volatils COV sans diminuer la température de fusion du four de fusion 10.

Le pilotage des injecteurs de comburant et de combustible 23, 25 permet à la fois de limiter la formation de composés organiques volatils COV, mais également de se prémunir contre les risques de suroxydation. En effet, si les injecteurs de comburant et de combustibles 23, 25 sont placés dans les deuxième, troisième et quatrième mode de fonctionnement Mod2, Mod3, et Mod4 donc en stœchiométrie d'oxydation pour l'injection de gaz, l'excédent de comburant est consommé pour limiter la formation des composés organiques volatils COV, et ne vient pas oxyder l'aluminium liquide M. D'ailleurs, et de manière avantageuse, si le procédé de fusion comprend l'introduction d'au moins un sel, le laitier L formé fait écran contre l'oxydation de l'aluminium liquide M par le comburant injecté.

Il est bien compris que les étapes du procédé de fusion décrites ci-avant peuvent être répétée, ou mise en œuvre en continu pendant toute la durée de la fusion des déchets d'aluminium. En particulier, l'étape de pilotage E6 est réalisée après l'étape de mesure E5 au sein d'une même phase et cette phase peut être répétée dans le temps, notamment de manière cyclique, périodique ou continue. Par exemple, l'étape de mesure E5 peut être mise en œuvre plusieurs fois sur un intervalle temporel de pilotage, de manière à mettre en œuvre l'étape de pilotage E6 plusieurs fois sur ledit intervalle temporel de pilotage. De la même manière, l'étape de mesure E5 et l'étape de pilotage E6 sont mises en œuvre simultanément et/ou de manière continue et en temps réel sur l'intervalle de pilotage. Ainsi, il est possible de piloter en temps réel le four de fusion 10 lors du procédé de pilotage. De cette manière, il est possible d'optimiser le temps de fusion de la quantité de déchets d'aluminium, tout en limitant la quantité de composés organiques volatils COV évacués hors de l'enceinte de fusion 13.

L'ensemble des dispositions précédemment décrites permettent de proposer un procédé de fusion permettant à la fois de former de l'aluminium liquide M à partir de déchets d'aluminium et de limiter la quantité de composés organiques volatils dans les fumées de combustion F évacuées hors de l'enceinte de fusion 13 du four de fusion 10 par la thermolyse desdits composés organiques volatils in-situ dans le four de fusion 10.

## Revendications

1. Système de fusion (1) de déchets d'aluminium pour fondre des déchets d'aluminium, le système de fusion (1) comprenant :

- un four de fusion (10) destiné à fondre lesdits déchets d'aluminium, et comprenant :
- un tambour (11) délimitant intérieurement une enceinte de fusion (13) destinée à recevoir lesdits déchets d'aluminium à fondre ;
- un brûleur (20) comprenant un dispositif d'allumage (21), au moins un injecteur de comburant (23), et au moins un injecteur de combustible (25), ledit injecteur de comburant (23) étant configuré pour injecter un débit de comburant à l'intérieur de l'enceinte de fusion (13), ledit injecteur de combustible (25) étant configuré pour injecter un débit de combustible à l'intérieur de l'enceinte de fusion (13), et le dispositif d'allumage (21) étant configuré pour démarrer une combustion du comburant et du combustible injectés dans l'enceinte de fusion (13), pour apporter de la chaleur dans l'enceinte de fusion (13);
- des moyens d'évacuation (17) configurés pour permettre d'extraire tout ou partie de fumées de combustion (F) de l'intérieur de l'enceinte de fusion (13) vers une zone d'air libre située à l'extérieur de l'enceinte de fusion (13) et où l'air est libre de circulation ;
- une hotte d'aspiration (30) disposée hors de l'enceinte de fusion (13) et destinée à capter par aspiration tout ou partie desdites fumées de combustion (F) présentes dans la zone d'air libre, ladite hotte d'aspiration (30) comprenant en outre une conduite de contrôle (31) comprenant un capteur de monoxyde de carbone (37) configuré pour mesurer une valeur d'une concentration en monoxyde de carbone (C) dans lesdites fumées de combustion (F) captées par la hotte d'aspiration (30) le capteur de monoxyde de carbone comprenant un émetteur laser configuré pour émettre un rayonnement laser, et un récepteur laser configuré pour recevoir ledit rayonnement laser émis, et pour mesurer un spectre d'absorption dudit rayonnement laser reçu, la valeur de la concentration en monoxyde de carbone (C) étant déterminée à partir dudit spectre d'absorption ainsi mesuré ;
- un dispositif de commande (50) configuré pour recevoir une information d'entrée représentative de la valeur de la concentration en monoxyde de carbone (C) mesurée par le capteur de monoxyde de carbone (37), et pour piloter ledit débit de comburant injecté par ledit injecteur de comburant (23) et/ou ledit débit de combustible injecté par ledit injecteur de combustible (25), en fonction de ladite information d'entrée, les débits de comburant et de combustible étant pilotés pour contenir le taux de composés organiques volatils (COV) en sortie du four de fusion à des concentrations inférieures à une valeur de sécurité.

2. Système de fusion (1) de déchets d'aluminium selon la revendication 1, dans lequel le four de fusion (10) est un four rotatif comprenant un tambour (11) rotatif configuré pour être mis en rotation.

3. Système de fusion (1) de déchets d'aluminium selon l'une quelconque des revendications 1 ou 2, dans lequel les moyens d'évacuation (17) du four de fusion (10) comprennent au moins une ouverture ménagée dans une paroi du four de fusion (10).

4. Système de fusion (1) de déchets d'aluminium selon l'une quelconque des revendications 1 à 3, dans lequel le four de fusion (10) comprend une lance additionnelle (27) de comburant distincte de l'au moins un injecteur de comburant (23), et configurée pour permettre l'introduction d'un débit additionnel de comburant à l'intérieur de l'enceinte de fusion (13).

5. Système de fusion (1) de déchets d'aluminium selon l'une quelconque des revendications 1 à 4, dans lequel l'injecteur de comburant (23) est un injecteur d'oxygène industriellement pur.

6. Système de fusion (1) de déchets d'aluminium selon l'une quelconque des revendications 1 à 5, dans lequel la conduite de contrôle (31) de la hotte d'aspiration (30) comprend une extrémité d'aspiration (33) au niveau de laquelle sont captées les fumées de combustion (F), et une extrémité de filtration (35), opposée à l'extrémité d'aspiration (33), ladite extrémité de filtration (35) étant munie d'un filtre à poussière (39) configuré pour filtrer des résidus restant dans les fumées de combustion (F), au niveau de l'extrémité de filtration (35).

7. Procédé de fusion de déchets d'aluminium par un système de fusion (1) de déchets d'aluminium, le procédé de fusion comprenant :

- une étape de mise à disposition (E1) d'un système de fusion (1) de déchets d'aluminium selon l'une quelconque des revendications 1 à 6 ;
- une première étape d'introduction (E21) dans laquelle une première quantité desdits déchets d'aluminium est introduite dans l'enceinte de fusion (13) du four de fusion (10) ;
- une étape de fusion (E3) dans laquelle le dispositif d'allumage (21) est allumé pour que le brûleur (20) apporte de la chaleur dans l'enceinte de fusion (13) du four de fusion (10) lorsqu'elle est alimentée en comburant et en combustible respectivement par l'injecteur de comburant (23), et par l'injecteur de combustible (25), ladite étape de fusion (E3) conduisant à la formation par fusion d'aluminium liquide (M), et à la formation de fumées de combustion (F) ;
- une étape de mesure (E5) dans laquelle le capteur de monoxyde de carbone (37) mesure la valeur de la concentration en monoxyde de carbone (C) dans les fumées de combustion (F) captées par la hotte d'aspiration (30) ;
- une étape de pilotage (E6) dans laquelle le dispositif de commande (50) reçoit une information d'entrée représentative de la valeur de la concentration en monoxyde de carbone (C) mesurée par le capteur de monoxyde de carbone (37), et pilote le débit de comburant injecté par l'injecteur de comburant (23), et/ou pilote le débit de combustible injecté par l'injecteur de combustible (25), en fonction de ladite information d'entrée, dans lequel les débits de comburant et de combustible sont pilotés pour contenir le taux de composés organiques volatils (COV) en sortie du four de fusion à des concentrations inférieures à une valeur de sécurité,
- le procédé comprenant en outre une étape préalable de calibration (E11), dans laquelle une loi de corrélation est établie entre :
- une concentration moyenne en monoxyde de carbone (Cm) mesurée par le capteur de monoxyde de carbone (37), et
- une concentration moyenne en composés organiques volatils (COV) mesurée au niveau de l'extrémité de filtration (35) par un capteur de composés organiques volatils (COV),
ladite loi de corrélation étant établie sur la base d'au moins trois valeurs de concentration moyenne en monoxyde de carbone (Cm) mesurées par le capteur de monoxyde de carbone (37), chacune associée à une valeur de concentration moyenne en composés organiques volatils ($[COV]_m$) mesurée sur un même intervalle de temps.

8. Procédé de fusion selon la revendication 7, dans lequel la première étape d'introduction (E21) comprend en outre l'introduction d'au moins un sel, de manière à obtenir un laitier (L) recouvrant l'aluminium liquide (M) et comprenant de l'alumine et ledit au moins un sel lors de l'étape de fusion (E3).

9. Procédé de fusion selon l'une quelconque des revendications 7 ou 8, dans lequel, lors de l'étape de pilotage (E6), le dispositif de commande (50) pilote le débit de comburant injecté par l'injecteur de comburant (23), et/ou le débit de combustible injecté par l'injecteur de combustible (25) selon les modes de fonctionnement suivants :

- un premier mode de fonctionnement (Mod1) dans lequel le débit de comburant et le débit de combustible sont choisis pour introduire le comburant et le combustible dans l'enceinte de fusion (13) dans des proportions stœchiométriques, le premier mode de fonctionnement (Mod1) étant établi si la valeur de la concentration en monoxyde de carbone (C) est strictement inférieure à un premier seuil (S1) ;

- un deuxième mode de fonctionnement (Mod2) dans lequel un rapport entre le débit de comburant et le débit de combustible est varié entre un rapport initial correspondant à une introduction dans des conditions stœchiométriques de comburant et de combustible dans l'enceinte de fusion (13) respectivement par l'injecteur de comburant (23) et l'injecteur de combustible (25), et un rapport maximal correspondant à un débit nul de combustible introduit par l'injecteur de combustible (25) dans l'enceinte de fusion (13), et un débit de comburant maximal introduit par l'injecteur de comburant (23) dans l'enceinte de fusion (13), ledit rapport entre le débit de comburant et le débit de combustible étant varié en fonction de la valeur de la concentration en monoxyde de carbone (C) mesurée, le deuxième mode de fonctionnement (Mod2) étant établi si la valeur de la concentration en monoxyde de carbone (C) est strictement inférieure à un deuxième seuil (S2) et supérieure ou égale au premier seuil (S1) ;

- un troisième mode de fonctionnement (Mod3) dans lequel le débit de comburant est placé à la valeur de débit de comburant maximale, le débit de combustible est stoppé, et le dispositif d'allumage (21) est éteint, le troisième mode de fonctionnement (Mod3) étant établi si la valeur de la concentration en monoxyde de carbone (C) est strictement inférieure à un troisième seuil (S3) et supérieure ou égale au deuxième seuil (S2) ;

- un quatrième mode de fonctionnement (Mod4) dans lequel le débit de comburant est placé à une valeur de débit maximale, le débit de combustible est stoppé, le dispositif d'allumage (21) est éteint, le quatrième mode de fonctionnement (Mod4) étant établi si la valeur de la concentration en monoxyde de carbone (C) est strictement supérieure au troisième seuil (S3),

- lesdits seuils étant déterminés pour limiter les émissions de composés organiques volatils (COV) inférieurs à des seuils définis.

**10.** Procédé de fusion selon la revendication 9, dans lequel l'étape de mise à disposition (E1) comprend la mise à disposition d'un système de fusion (1) de déchets d'aluminium selon la revendication 5, et dans lequel le quatrième mode de fonctionnement (Mod4) comprend en outre l'introduction d'un débit additionnel de comburant à l'intérieur de l'enceinte de fusion (13) par la lance additionnelle (27).

**11.** Procédé de fusion selon l'une quelconque des revendications 9 ou 10, dans lequel le premier mode de fonctionnement (Mod1) comprend la mise en œuvre d'une deuxième étape d'introduction (E22) dans laquelle une deuxième quantité de déchets d'aluminium est introduite dans l'enceinte de fusion (13) du four de fusion (10).

**12.** Procédé de fusion selon l'une quelconque des revendications 9 à 11, dans lequel lors de l'étape de pilotage (E6), si le dispositif d'allumage (21) est éteint, et si la valeur de la concentration en monoxyde de carbone (C) est strictement inférieure à une valeur seuil de redémarrage (Sr), alors le dispositif d'allumage (21) est allumé, la valeur seuil de redémarrage (Sr) étant strictement supérieure au premier seuil (S1) et strictement inférieure au deuxième seuil (S2).

**13.** Procédé de fusion selon l'une quelconque des revendications 7 à 12, comprenant en outre une étape de refroidissement (E4), dans laquelle les fumées de combustion (F) sont diluées et refroidies à l'air libre à l'extérieur de l'enceinte de fusion (13).

**14.** Procédé de fusion selon l'une quelconque des revendications 7 à 13, dans lequel l'étape de pilotage (E6) est réalisée après l'étape de mesure (E5) au sein d'une même phase et ladite phase est répétée dans le temps, notamment de manière cyclique ou périodique.

**15.** Procédé de fusion selon l'une quelconque des revendications 7 à 14 dans lequel le débit de comburant injecté par l'injecteur de comburant et/ou le débit de combustible injecté par l'injecteur de combustible sont ajustés pour maintenir une stœchiométrie d'oxydation pour l'injection de gaz.

**Patentansprüche**

**1.** Schmelzsystem (1) für Aluminiumabfälle zum Schmelzen von Aluminiumabfällen, wobei das Schmelzsystem (1) Folgendes umfasst:

- einen Schmelzofen (10), der dazu bestimmt ist, die Aluminiumabfälle zu schmelzen, und umfassend:
- eine Trommel (11), die innen eine Schmelzkammer (13) begrenzt, die dazu bestimmt ist, den zu schmelzenden Aluminiumabfall aufzunehmen;

- einen Brenner (20), der eine Zündvorrichtung (21), mindestens eine Oxidationsmitteleinspritzdüse (23) und mindestens eine Brennstoffeinspritzdüse (25) umfasst, wobei die Oxidationsmitteleinspritzdüse (23) so eingerichtet ist, dass sie einen Oxidationsmitteldurchfluss in die Schmelzkammer (13) einspritzt, wobei die Brennstoffeinspritzdüse (25) so eingerichtet ist, dass sie einen Brennstoffdurchfluss in die Schmelzkammer (13) einspritzt, und die Zündvorrichtung (21) eingerichtet ist, um eine Verbrennung des in die Schmelzkammer (13) eingespritzten Oxidationsmittels und Brennstoffs zu starten, um Wärme in die Schmelzkammer (13) zu bringen;

- Evakuierungsmittel (17), die so eingerichtet sind, dass sie es ermöglichen, Verbrennungsrauchgase (F) ganz oder teilweise aus dem Inneren der Schmelzkammer (13) in einen freien Luftbereich außerhalb der Schmelzkammer (13) abzusaugen, in dem die Luft frei zirkulieren kann;

- eine Ansaughaube (30), die außerhalb der Schmelzkammer (13) angeordnet ist und dazu bestimmt ist, die in dem freien Luftbereich vorhandenen Verbrennungsrauchgase (F) ganz oder teilweise anzusaugen, wobei die Ansaughaube (30) ferner eine Prüfungsleitung (31) umfasst, die einen Kohlenmonoxidsensor (37) umfasst, der so eingerichtet ist, dass er einen Wert einer Kohlenmonoxidkonzentration (C) in den von der Ansaughaube (30) abgesaugten Verbrennungsrauchgasen (F) misst, wobei der Kohlenmonoxidsensor einen Lasersender, der so eingerichtet ist, dass er eine Laserstrahlung emittiert, und einen Laserempfänger umfasst, der so eingerichtet ist, dass er die emittierte Laserstrahlung empfängt, und um ein Absorptionsspektrum der empfangenen Laserstrahlung zu messen, wobei der Wert der Kohlenmonoxidkonzentration (C) aus dem so gemessenen Absorptionsspektrum bestimmt wird;

- eine Steuervorrichtung (50), die so eingerichtet ist, dass sie eine Eingangsinformation empfängt, die repräsentativ für den Wert der Kohlenmonoxidkonzentration (C) ist, der von dem Kohlenmonoxidsensor (37) gemessen wird, und um den von der Oxidationsmitteleinspritzdüse (23) eingespritzten Oxidationsmitteldurchfluss und/oder den von der Brennstoffeinspritzdüse (25) eingespritzten Brennstoffdurchfluss in Abhängigkeit von der Eingangsinformation zu steuern, wobei die Oxidationsmittel- und Brennstoffdurchflüsse so gesteuert werden, dass der Gehalt an flüchtigen organischen Verbindungen (VOC) an dem Ausgang des Schmelzofens in Konzentrationen unter einem Sicherheitswert gehalten wird.

2. Schmelzsystem (1) für Aluminiumabfälle nach Anspruch 1, wobei der Schmelzofen (10) ein rotierender Ofen ist, der eine rotierende Trommel (11) umfasst, die so eingerichtet ist, dass sie rotiert.

3. Schmelzsystem (1) für Aluminiumabfälle nach einem der Ansprüche 1 oder 2, wobei die Evakuierungsmittel (17) des Schmelzofens (10) mindestens eine Öffnung in einer Wand des Schmelzofens (10) umfassen.

4. Schmelzsystem (1) für Aluminiumabfälle nach einem der Ansprüche 1 bis 3, wobei der Schmelzofen (10) eine zusätzliche Oxidationsmittellanze (27) umfasst, die von der mindestens einen Oxidationsmitteleinspritzdüse (23) getrennt ist, und so eingerichtet ist, dass sie die Einführung eines zusätzlichen Oxidationsmitteldurchflusses in die Schmelzkammer (13) ermöglicht.

5. Schmelzsystem (1) für Aluminiumabfälle nach einem der Ansprüche 1 bis 4, wobei die Oxidationsmitteleinspritzdüse (23) eine Einspritzdüse für industriell reinen Sauerstoff ist.

6. Schmelzsystem (1) für Aluminiumabfälle nach einem der Ansprüche 1 bis 5, wobei die Prüfungsleitung (31) der Ansaughaube (30) ein Ansaugende (33), an dem die Verbrennungsrauchgase (F) aufgefangen werden, und ein Filtrationsende (35) gegenüber dem Ansaugende (33) umfasst, wobei das Filtrationsende (35) mit einem Staubfilter (39) ausgestattet ist, der so eingerichtet ist, dass er Reste in den Verbrennungsrauchgasen (F), am Ende der Filtration (35), filtert.

7. Verfahren zum Schmelzen von Aluminiumabfällen durch ein Schmelzsystem (1) für Aluminiumabfälle, wobei das Schmelzverfahren Folgendes umfasst:

- einen Bereitstellungsschritt (E1) eines Schmelzsystems (1) für Aluminiumabfälle nach einem der Ansprüche 1 bis 6;
- einen ersten Einführungsschritt (E21), in dem eine erste Menge der Aluminiumabfälle in die Schmelzkammer (13) des Schmelzofens (10) eingeführt wird;
- einen Schmelzschritt (E3), wobei die Zündvorrichtung (21) gezündet wird, damit der Brenner (20) Wärme in die Schmelzkammer (13) des Schmelzofens (10) bringt, wenn er durch die Oxidationsmitteleinspritzdüse (23) und die Brennstoffeinspritzdüse (25) mit Oxidationsmittel beziehungsweise Brennstoff versorgt wird, wobei der Schmelzschritt (E3) zur Schmelzbildung von flüssigem Aluminium (M) und zur Verbrennungsrauchgasbildung (F) führt;

- einen Messschritt (E5), in dem der Kohlenmonoxidsensor (37) den Wert der Kohlenmonoxidkonzentration (C) in den von der Ansaughaube (30) erfassten Verbrennungsrauchgasen (F) misst;

- einen Steuerschritt (E6), wobei die Steuervorrichtung (50) eine Eingangsinformation empfängt, die für den Wert der Kohlenmonoxidkonzentration (C) repräsentativ ist, der von dem Kohlenmonoxidsensor (37) gemessen wird, und den von der Oxidationsmitteleinspritzdüse (23) eingespritzten Oxidationsmitteldurchfluss steuert, und/oder den von der Brennstoffeinspritzdüse (25) eingespritzten Brennstoffdurchfluss in Abhängigkeit von der Eingangsinformation steuert, wobei die Oxidationsmittel- und Brennstoffdurchflüsse so gesteuert werden, dass der Anteil flüchtiger organischer Verbindungen (VOC) an dem Ausgang des Schmelzofens in Konzentrationen unter einem Sicherheitswert gehalten wird,

- wobei das Verfahren ferner einen vorherigen Kalibrierschritt (E11) umfasst, wobei ein Korrelationsgesetz zwischen Folgenden festgelegt wird:

- einer von dem Kohlenmonoxidsensor (37) gemessenen mittleren Kohlenmonoxidkonzentration (Cm), und

- einer mittleren Konzentration an flüchtigen organischen Verbindungen (VOC), gemessen an dem Filtrationsende (35) durch einen Sensor für flüchtige organische Verbindungen (VOC), wobei das Korrelationsgesetz auf der Basis von mindestens drei durch den Kohlenmonoxidsensor (37) gemessenen Werten der mittleren Kohlenmonoxidkonzentration (Cm) festgelegt wird, die jeweils mit einem über ein und dasselbe Zeitintervall gemessenen Wert der mittleren Konzentration flüchtiger organischer Verbindungen ($[VOC]_m$) verbunden sind.

8. Schmelzverfahren nach Anspruch 7, wobei der erste Einführungsschritt (E21) ferner das Einführen von mindestens einem Salz umfasst, so dass eine Schlacke (L) entsteht, die das flüssige Aluminium (M) bedeckt und Aluminiumoxid und das mindestens eine Salz während des Schmelzschritts (E3) umfasst.

9. Schmelzverfahren nach einem der Ansprüche 7 oder 8, wobei die Steuervorrichtung (50) während des Steuerschritts (E6) den von der Oxidationsmitteleinspritzdüse (23) eingespritzten Oxidationsmitteldurchfluss und/oder den von der Brennstoffeinspritzdüse (25) eingespritzten Brennstoffdurchfluss gemäß den folgenden Betriebsmodi steuert:

- einem ersten Betriebsmodus (Mod1), wobei der Oxidationsmitteldurchfluss und der Brennstoffdurchfluss ausgewählt sind, um das Oxidationsmittel und den Brennstoff in stöchiometrischen Verhältnissen in die Schmelzkammer (13) einzuführen, wobei der erste Betriebsmodus (Mod1) festgelegt wird, wenn der Wert der Kohlenmonoxidkonzentration (C) streng unter einem ersten Schwellenwert (S1) liegt;

- einem zweiten Betriebsmodus (Mod2), bei dem ein Verhältnis zwischen dem Oxidationsmitteldurchfluss und dem Brennstoffdurchfluss zwischen einem Anfangsverhältnis variiert wird, das einem stöchiometrischen Einführen von Oxidationsmittel und Brennstoff in die Schmelzkammer (13) durch die Oxidationsmitteleinspritzdüse (23) und die Brennstoffeinspritzdüse (25) entspricht, und einem maximalen Verhältnis, das einer Nullmenge von Brennstoff entspricht, der von der Brennstoffeinspritzdüse (25) in die Schmelzkammer (13) eingeführt wird, und einem maximalen Oxidationsmitteldurchfluss, der durch die Oxidationsmitteleinspritzdüse (23) in die Schmelzkammer (13) eingeführt wird, wobei das Verhältnis zwischen Oxidationsmitteldurchfluss und Brennstoffdurchfluss in Abhängigkeit von dem Wert der gemessenen Kohlenmonoxidkonzentration (C) variiert wird, wobei der zweite Betriebsmodus (Mod2) festgelegt wird, wenn der Wert der Kohlenmonoxidkonzentration (C) streng unter einem zweiten Schwellenwert (S2) liegt und größer oder gleich dem ersten Schwellenwert (S1) ist;

- einem dritten Betriebsmodus (Mod3), in dem der Oxidationsmitteldurchfluss auf den maximalen Oxidationsmitteldurchflusswert eingestellt, der Brennstoffdurchfluss gestoppt und die Zündvorrichtung (21) ausgeschaltet wird, wobei der dritte Betriebsmodus (Mod3) festgelegt wird, wenn der Wert der Kohlenmonoxidkonzentration (C) streng unter einem dritten Schwellenwert (S3) liegt und größer oder gleich dem zweiten Schwellenwert (S2) ist;

- einem vierten Betriebsmodus (Mod4), in dem der Oxidationsmitteldurchfluss auf einen maximalen Durchflusswert eingestellt, der Brennstoffdurchfluss gestoppt, die Zündvorrichtung (21) ausgeschaltet wird, wobei der vierte Betriebsmodus (Mod4) festgelegt wird, wenn der Wert der Kohlenmonoxidkonzentration (C) streng über dem dritten Schwellenwert (S3) liegt,

- wobei die Schwellenwerte bestimmt werden, um die Emissionen flüchtiger organischer Verbindungen (VOC) unter bestimmte Schwellenwerte zu begrenzen.

10. Schmelzverfahren nach Anspruch 9, wobei der Bereitstellungsschritt (E1) das Bereitstellen eines Schmelzsystems (1) für Aluminiumabfälle nach Anspruch 5 umfasst, und wobei der vierte Betriebsmodus (Mod4) ferner das Einführen eines zusätzlichen Oxidationsmitteldurchflusses in die Schmelzkammer (13) durch die zusätzliche Lanze (27) umfasst.

11. Schmelzverfahren nach einem der Ansprüche 9 oder 10, wobei der erste Betriebsmodus (Mod1) das Bereitstellen eines zweiten Einführungsschritts (E22) umfasst, bei dem eine zweite Menge Aluminiumabfälle in die Schmelzkammer (13) des Schmelzofens (10) eingeführt wird.

12. Schmelzverfahren nach einem der Ansprüche 9 bis 11, wobei bei dem Steuerschritt (E6), wenn die Zündvorrichtung (21) ausgeschaltet ist, und wenn der Wert der Kohlenmonoxidkonzentration (C) streng unter einem Wiederanlaufschwellenwert (Sr) liegt, dann die Zündvorrichtung (21) eingeschaltet ist, wobei der Wiederanlaufschwellenwert (Sr) streng über dem ersten Schwellenwert (S1) und streng unter dem zweiten Schwellenwert (S2) liegt.

13. Schmelzverfahren nach einem der Ansprüche 7 bis 12, ferner umfassend einen Kühlschritt (E4), bei dem die Verbrennungsrauchgase (F) verdünnt und an der Luft außerhalb der Schmelzkammer (13) abgekühlt werden.

14. Schmelzverfahren nach einem der Ansprüche 7 bis 13, wobei der Steuerschritt (E6) nach dem Messschritt (E5) innerhalb einer gleichen Phase durchgeführt wird und die Phase im Laufe der Zeit, insbesondere zyklisch oder periodisch, wiederholt wird.

15. Schmelzverfahren nach einem der Ansprüche 7 bis 14, wobei der von der Oxidationsmitteleinspritzdüse eingespritzte Oxidationsmitteldurchfluss und/oder der von der Brennstoffeinspritzdüse eingespritzte Brennstoffdurchfluss angepasst werden, um eine Oxydationsstöchiometrie für die Gaseinspritzung beizubehalten.

**Claims**

1. Aluminum scrap melting system (1) for melting aluminum scrap, the melting system (1) comprising:

   - a melting furnace (10) intended to melt said aluminum scrap, and comprising:
   - a drum (11) internally delimiting a melting chamber (13) intended to receive said aluminum scrap to be melted;
   - a burner (20) comprising a firing device (21), at least one oxidant injector (23), and at least one fuel injector (25), said oxidant injector (23) being configured to inject an oxidant flow inside the melting chamber (13), said fuel injector (25) being configured to inject a fuel flow inside the melting chamber (13), and the firing device (21) being configured to start a combustion of the oxidant and the fuel injected into the melting chamber (13), to supply heat into the melting chamber (13);
   - evacuation means (17) configured to make it possible to extract all or some of the combustion fumes (F) from inside the melting chamber (13) to a vent zone located outside the melting chamber (13) and where air is free to circulate;
   - a suction hood (30) disposed outside the melting chamber (13) and intended to capture by suction all or some of said combustion fumes (F) present in the vent zone, said suction hood (30) furthermore comprising an inspection pipe (31) comprising a carbon monoxide sensor (37) configured to measure a value of a carbon monoxide concentration (C) in said combustion fumes (F) captured by the suction hood (30), the carbon monoxide sensor comprising a laser emitter configured to emit a laser radiation, and a laser receiver configured to receive said emitted laser radiation, and to measure an absorption spectrum of said received laser radiation, the value of the carbon monoxide concentration (C) being determined on the basis of said absorption spectrum thus measured;
   - a control device (50) configured to receive an item of input information representative of the value of the carbon monoxide concentration (C) measured by the carbon monoxide sensor (37), and to pilot said oxidant flow injected by said oxidant injector (23) and/or said fuel flow injected by said fuel injector (25), according to said item of input information, the oxidant and fuel flows being piloted to contain the volatile organic compound content (VOC) at the output of the melting furnace at concentrations less than a safety value.

2. Aluminum scrap melting system (1) according to claim 1, wherein the melting furnace (10) is a rotary furnace comprising a rotary drum (11) configured to be rotated.

3. Aluminum scrap melting system (1) according to any one of claims 1 or 2, wherein the evacuation means (17) of the melting furnace (10) comprise at least one opening formed in a wall of the melting furnace (10).

4. Aluminum scrap melting system (1) according any one of claims 1 to 3, wherein the melting furnace (10) comprises an additional oxidant lance (27) distinct from the at least one oxidant injector (23), and configured to allow the introduction of an additional oxidant flow inside the melting chamber (13).

5. Aluminum scrap melting system (1) according to any one of claims 1 to 4, wherein the oxidant injector (23) is an industrially pure oxygen injector.

6. Aluminum scrap melting system (1) according to any one of claims 1 to 5, wherein the inspection pipe (31) of the suction hood (30) comprises a suction end (33) at which the combustion fumes (F) are captured, and a filtration end (35), opposite the suction end (33), said filtration end (35) being equipped with a dust filter (39) configured to filter residue remaining in the combustion fumes (F), at the filtration end (35).

7. Process for melting aluminum scrap by an aluminum scrap melting system (1), the melting process comprising:

   - a step (E1) of providing an aluminum scrap melting system (1) according to any one of claims 1 to 6;
   - a first introduction step (E21) wherein a first quantity of said aluminum scrap is introduced into the melting chamber (13) of the melting furnace (10);
   - a melting step (E3) wherein the firing device (21) is fired so that the burner (20) supplies heat into the melting chamber (13) of the melting furnace (10) when it is supplied with oxidant and with fuel respectively by the oxidant injector (23), and by the fuel injector (25), said melting step (E3) resulting in the formation of liquid aluminum (M) by melting, and in the formation of combustion fumes (F);
   - a measurement step (E5) wherein the carbon monoxide sensor (37) measures the value of the carbon monoxide concentration (C) in the combustion fumes (F) captured by the suction hood (30);
   - a piloting step (E6) wherein the control device (50) receives an item of input information representative of the value of the carbon monoxide concentration (C) measured by the carbon monoxide sensor (37), and pilots the oxidant flow injected by the oxidant injector (23) and/or pilots the fuel flow injected by the fuel injector (25), according to said item of input information, wherein the oxidant and fuel flows are piloted to contain the volatile organic compound content (VOC) at the output of the melting furnace at concentrations less than a safety value,
   - the process furthermore comprising a prior calibration step (E11), wherein a correlation law is established between:
   - a mean carbon monoxide concentration (Cm) measured by the carbon monoxide sensor (37), and
   - a mean volatile organic compound concentration (VOC) measured at the filtration end (35) by a volatile organic compound sensor (VOC), said correlation law being established on the basis of at least three mean carbon monoxide concentration values (Cm) measured by the carbon monoxide sensor (37), each associated with a mean volatile organic compound concentration value ($[VOC]_m$) measured over the same time interval.

8. Melting process according to claim 7, wherein the first introduction step (E21) furthermore comprises the introduction of at least one salt, so as to obtain a slag (L) covering the liquid aluminum (M) and comprising alumina and said at least one salt during the melting step (E3).

9. Melting process according to any one of claims 7 or 8, wherein, during the piloting step (E6), the control device (50) pilots the oxidant flow injected by the oxidant injector (23), and/or the fuel flow injected by the fuel injector (25) according to the following operating modes:

   - a first operating mode (Mod1) wherein the oxidant flow and the fuel flow are chosen to introduce the oxidant and the fuel into the melting chamber (13) in stoichiometric proportions, the first operating mode (Mod1) being established if the value of the carbon monoxide concentration (C) is strictly less than a first threshold (51);
   - a second operating mode (Mod2) wherein a ratio between the oxidant flow and the fuel flow is varied between an initial ratio corresponding to an introduction under stoichiometric conditions of oxidant and fuel into the melting chamber (13) respectively by the oxidant injector (23) and the fuel injector (25), and a maximum ratio corresponding to a zero fuel flow introduced by the fuel injector (25) into the melting chamber (13), and a maximum oxidant flow introduced by the oxidant injector (23) into the melting chamber (13), said ratio between the oxidant flow and the fuel flow being varied according to the value of the carbon monoxide concentration (C) measured, the second operating mode (Mod2) being established if the value of the carbon monoxide concentration (C) is strictly less than a second threshold (S2) and greater than or equal to the first threshold (S1);
   - a third operating mode (Mod3) wherein the oxidant flow is placed at the maximum oxidant flow value, the fuel flow is stopped, and the firing device (21) is switched off, the third operating mode (Mod3) being established if the value of the carbon monoxide concentration (C) is strictly less than a third threshold (S3) and greater than or equal to the second threshold (S2);
- a fourth operating mode (Mod4) wherein the oxidant flow is placed at a maximum oxidant flow value, the fuel flow is stopped, the firing device (21) is switched off, the fourth operating mode (Mod4) being established if the value of the carbon monoxide concentration (C) is strictly greater than the third threshold (S3),
- said thresholds being determined to limit the volatile organic compound emissions (VOC) lower than defined thresholds.

10. Melting process according to claim 9, wherein the provision step (E1) comprises providing an aluminum scrap melting system (1) according to claim 5, and wherein the fourth operating mode (Mod4) furthermore comprises introducing an additional oxidant flow inside the melting chamber (13) by the additional lance (27).

11. Melting process according to any one of claims 9 or 10, wherein the first operating mode (Mod1) comprises the implementation of a second introduction step (E22) wherein a second quantity of aluminum scrap is introduced into the melting chamber (13) of the melting furnace (10).

12. Melting process according to any one of claims 9 to 11, wherein during the piloting step (E6), if the firing device (21) is switched off, and if the value of the carbon monoxide concentration (C) is strictly less than a restart threshold value (Sr), then the firing device (21) is switched on, the restart threshold value (Sr) being strictly greater than the first threshold (S1) and strictly less than the second threshold (S2).

13. Melting process according to any one of claims 7 to 12, further comprising a cooling step (E4), wherein the combustion fumes (F) are diluted and cooled in the free air outside the melting chamber (13).

14. Melting process according to any one of claims 7 to 13, wherein the piloting step (E6) is carried out after the measurement step (E5) within the same phase and said phase is repeated over time, in particular cyclically or periodically.

15. Melting process according to any one of claims 7 to 14, wherein the oxidant flow injected by the oxidant injector, and/or the fuel flow injected by the fuel injector are adjusted to maintain an oxidation stoichiometry for the gas injection.

[Fig. 1]

[Fig. 2]

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20170051914 A1
- WO 2005085732 A1
- EP 1243663 A2
- EP 4092390 A
- US 2005103159 A
- WO 0133200 A
- US 2020284513 A
- DE 102013012831
- US 2011154949 A
- WO 2021220802 A